(19) Europäisches Patentamt / European Patent Office / Office européen des brevets

(11) EP 4 477 721 A1

# (12) EUROPEAN PATENT APPLICATION

(43) Date of publication:
**18.12.2024 Bulletin 2024/51**

(21) Application number: **24180820.3**

(22) Date of filing: **07.06.2024**

(51) International Patent Classification (IPC):
***C09J 7/10*** *(2018.01)* ***C09J 7/38*** *(2018.01)*
***C09J 133/04*** *(2006.01)*

(52) Cooperative Patent Classification (CPC):
**C09J 7/10; C09J 7/385; C09J 133/04;**
C09J 2203/318; C09J 2301/302; C09J 2301/312;
C09J 2433/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 JP 2023099355**

(71) Applicant: **NITTO DENKO CORPORATION**
**Ibaraki-shi**
**Osaka 567-8680 (JP)**

(72) Inventors:
- **Motegi, Yusuke**
  **Ibaraki-shi, Osaka, 567-8680 (JP)**
- **Sawazaki, Ryohei**
  **Ibaraki-shi, Osaka, 567-8680 (JP)**
- **Mitsui, Kazuma**
  **Ibaraki-shi, Osaka, 567-8680 (JP)**

(74) Representative: **Grünecker Patent- und Rechtsanwälte**
**PartG mbB**
**Leopoldstraße 4**
**80802 München (DE)**

## (54) PRESSURE-SENSITIVE ADHESIVE COMPOSITION, PRESSURE-SENSITIVE ADHESIVE LAYER, PRESSURE-SENSITIVE ADHESIVE SHEET, OPTICAL MEMBER WITH PRESSURE-SENSITIVE ADHESIVE LAYER, IMAGE DISPLAY DEVICE, AND TOUCH PANEL

(57) To provide a pressure-sensitive adhesive composition for forming a pressure-sensitive adhesive layer used for laminating an optical member of an image display device, wherein the composition can form a pressure-sensitive adhesive layer having high reliability in which the adhesive strength does not change easily in response to environmental changes, having small changes in adhesive strength due to the storage environment immediately after filming, and having high productivity; a pressure-sensitive adhesive layer; a pressure-sensitive adhesive sheet; an optical member with a pressure-sensitive adhesive layer; an image display device; and a touch panel. The pressure-sensitive adhesive composition of the present invention is for forming a pressure-sensitive adhesive layer used for laminating an optical member of an image display device, wherein when a water absorption rate of the layer stored under conditions at 23°C 90% RH for 360 minutes is defined as X90 (%), formula (1) is satisfied:

$$X90 \leq 1.5\% \quad (1).$$

[Figure 1]

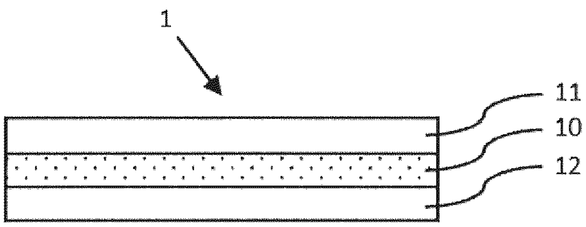


EP 4 477 721 A1

## Description

### Technical Field

The present invention relates to a pressure-sensitive adhesive composition, a pressure-sensitive adhesive layer, a pressure-sensitive adhesive sheet, an optical member with a pressure-sensitive adhesive layer, an image display device, and a touch panel.

### Background Art

In recent years, image display devices such as liquid crystal displays (LCDs) and organic EL displays (OLEDs), and touch panels incorporating touch sensors in these image display devices have been widely used in various fields. Such an image display device or a touch panel has a configuration in which various optical members such as a polarizing film, a retardation film, an optical compensation film, a touch sensor film, and a cover film are laminated on an image display panel. A pressure-sensitive adhesive sheet having a pressure-sensitive adhesive layer is used in applications for laminating these optical members. For example, transparent pressure-sensitive adhesive sheets are used for laminating various optical members in an image display device (see e.g., Patent Literatures 1 to 3).

### Citation List

### Patent Literatures

Patent Literature 1 Japanese Patent Laid-Open No. 2003-238915
Patent Literature 2 Japanese Patent Laid-Open No. 2003-342542
Patent Literature 3 Japanese Patent Laid-Open No. 2004-231723

### Summary of Invention

### Technical Problem

The image display devices and touch panels described above are also widely used in in-vehicle displays such as car navigation devices. In-vehicle displays are often exposed to harsh environments such as high temperatures, high humidity, and sunlight for long periods of time, requiring high reliability. In particular, with the spread of electric vehicles (EVs), it is expected that the screen will become larger and more bendable in the future, the required reliability is getting higher year by year, and thus a pressure-sensitive adhesive having high reliability in which properties such as adhesive strength are stable even when the environment changes, is required. In addition, there is another problem that, when the adhesive strength changes greatly due to the storage environment from immediately after the pressure-sensitive adhesive layer is formed, it is necessary to keep the pressure-sensitive adhesive layer until the adhesive strength stabilizes, which reduces productivity.

Accordingly, an object of the present invention is to provide a pressure-sensitive adhesive composition for forming a pressure-sensitive adhesive layer used for laminating an optical member of an image display device, wherein the pressure-sensitive adhesive composition can form a pressure-sensitive adhesive layer having high reliability in which the adhesive strength is stable even when the environment changes, having small changes in adhesive strength due to the storage environment from immediately after filming, and having excellent productivity. Another object of the present invention is to provide a pressure-sensitive adhesive layer having high reliability in which the adhesive strength is stable even when the environment changes, having small changes in adhesive strength due to the storage environment from immediately after filming, and having excellent productivity. Another object of the present invention is to provide a pressure-sensitive adhesive sheet comprising a pressure-sensitive adhesive layer having high reliability in which the adhesive strength is stable even when the environment changes, having small changes in adhesive strength due to the storage environment from immediately after filming, and having excellent productivity. Another object of the present invention is to provide an optical member with a pressure-sensitive adhesive layer, comprising a pressure-sensitive adhesive layer having high reliability in which the adhesive strength is stable even when the environment changes, having small changes in adhesive strength due to the storage environment from immediately after filming, and having excellent productivity. Another object of the present invention is to provide a high-performance image display device or touch panel that comprises the optical member with a pressure-sensitive adhesive layer, wherein the image display device or touch panel have high reliability even when the environment changes and have excellent durability.

Solution to Problem

A first aspect of the present invention provides a pressure-sensitive adhesive composition for forming a pressure-sensitive adhesive layer used for laminating an optical member of an image display device. Herein, the pressure-sensitive adhesive composition of the first aspect of the present invention may be referred to as "the pressure-sensitive adhesive composition of the present invention".

The pressure-sensitive adhesive composition of the present invention is used for forming a pressure-sensitive adhesive layer used in an image display device such as a liquid crystal display (LCD) or an organic EL display (OLED), or a touch panel incorporating a touch sensor in such an image display device, for laminating an optical member such as a polarizing film, a retardation film, an optical compensation film, a touch sensor film, or a cover film on an image display panel or for laminating these optical members to each other.

The pressure-sensitive adhesive composition of the present invention is suitably used particularly for in-vehicle image display devices and touch panels. In-vehicle displays are often exposed to harsh environments such as high temperatures, high humidity, and sunlight for long periods of time, requiring high reliability to ensure that properties such as adhesive strength do not change easily even when the environment changes. In addition, there is another problem that, when the adhesive strength changes greatly due to the storage environment from immediately after the pressure-sensitive adhesive layer is formed, it is necessary to keep the pressure-sensitive adhesive layer until the adhesive strength stabilizes, which reduces productivity.

In the pressure-sensitive adhesive composition of the present invention, when a water absorption rate of the pressure-sensitive adhesive layer stored under conditions at 23°C 90% RH for 360 minutes is defined as X90 (%), the following formula (1) is satisfied:

$$X90 \leq 1.5\% \quad (1)$$

The water absorption rate X90 is a proportion of water absorbed by the pressure-sensitive adhesive layer in a high humidity environment of 90% RH and satisfies the above formula (1), that is, the water absorption rate X90 is 1.5% or less. When the water absorption rate X90 is high, the swelling and shrinkage of the pressure-sensitive adhesive layer due to environmental changes become large, and the elastic modulus changes. In addition, moisture contained in the pressure-sensitive adhesive may interact with the polar groups on the surface of the pressure-sensitive adhesive, inhibiting the interaction of the polar groups on the pressure-sensitive adhesive surface and the polar groups on the surface of an object, which may affect the adhesive strength. The configuration in which the water absorption rate X90 satisfies the above formula (1) is preferable in that a pressure-sensitive adhesive layer having high reliability in which the adhesive strength does not change easily in response to environmental changes such as temperature and humidity can be obtained. It is also preferable in that a pressure-sensitive adhesive layer having small changes in adhesive strength due to the storage environment from immediately after filming, and having excellent productivity can be obtained.

In the pressure-sensitive adhesive composition of the present invention, when a water absorption rate of the pressure-sensitive adhesive layer stored under conditions at 23°C 25% RH for 240 minutes is defined as X25 (%), it is preferable that the following formula (2) is satisfied.

$$X90 - X25 \leq 1.5\% \quad (2)$$

The water absorption rate X25 is a proportion of water absorbed by the pressure-sensitive adhesive layer in a dry environment of 25% RH, and as described above, it is preferable that the difference between the water absorption rate X90 and the water absorption rate X25 (X90 - X25) satisfies the above formula (2), that is, X90 - X25 is preferably 1.5% or less. When the difference between X25 and X90 is large, the amount of moisture contained in the pressure-sensitive adhesive layer changes greatly due to the environment, and the effect on the adhesive strength becomes large, which may reduce reliability. The configuration in which the difference X90 - X25 satisfies the above formula (2) is preferable in that a pressure-sensitive adhesive layer pressure-sensitive adhesive layer having high reliability in which the adhesive strength does not change easily in response to environmental changes such as temperature and humidity, and usable in various environments can be obtained. It is also preferable in that a pressure-sensitive adhesive layer having small changes in adhesive strength due to the storage environment from immediately after filming, and having excellent productivity can be obtained.

In the pressure-sensitive adhesive composition of the present invention, when a time reaching from a water absorption rate X75 (%) of the pressure-sensitive adhesive layer stored under conditions at 23°C 75% RH for 360 minutes to a half value of the water absorption rate X90 (%) of the pressure-sensitive adhesive layer stored under conditions at 23°C 90% RH for 360 minutes is defined as T90 (min), it is preferable that the following formula (3) is satisfied.

$$T90 \geq 16 \text{ min} \quad (3)$$

The T90 is a time reaching from a water absorption rate X75 (%) of the pressure-sensitive adhesive layer stored under conditions at 23°C 75% RH for 360 minutes to a half value of the water absorption rate X90 (%) of the pressure-sensitive adhesive layer stored under conditions at 23°C 90% RH for 360 minutes, and the amount of moisture changes (increases) most sharply in this time reaching to the half value. Thus, the longer the T90, the slower the moisture absorption speed, and a sharp change in adhesive strength can be prevented even when environment changes. The configuration in which the T90 satisfies the above formula (3), that is, the T90 is 16 minutes or more, is preferable in that sharp changes in adhesive strength due to environmental changes can be prevented, and the pressure-sensitive adhesive layer having high reliability can be obtained. It is also preferable in that a pressure-sensitive adhesive layer having small changes in adhesive strength due to the storage environment from immediately after filming, and having excellent productivity can be obtained.

In the pressure-sensitive adhesive composition of the present invention, when a time reaching from an absolute dry state of the pressure-sensitive adhesive layer to a half value of the water absorption rate X25 (%) of the pressure-sensitive adhesive layer stored under conditions at 23°C 25% RH for 240 minutes is defined as T25 (min), it is preferable that the following formula (4) is satisfied.

$$T90/T25 \geq 1.0 \quad (4)$$

The T90/T25 satisfies the above formula (4), that is, the T90/T25 is preferably 1.0 or more. Under higher humidity conditions, when the moisture absorption speed of the pressure-sensitive adhesive layer is slow, sharp changes in adhesive strength due to environmental changes can be prevented, thereby the pressure-sensitive adhesive layer can be used in various environments. The configuration in which the T90/T25 satisfies the above formula (4) is preferable in that sharp changes in adhesive strength due to environmental changes can be prevented, and the pressure-sensitive adhesive layer having high reliability and usable in various environments can be obtained. It is also preferable in that a pressure-sensitive adhesive layer having small changes in adhesive strength due to the storage environment from immediately after filming, and having excellent productivity can be obtained.

A second aspect of the present invention provides a pressure-sensitive adhesive layer formed of the pressure-sensitive adhesive composition of the present invention. Herein, the pressure-sensitive adhesive layer of the second aspect of the present invention may be referred to as "the pressure-sensitive adhesive layer of the present invention". Since the pressure-sensitive adhesive layer of the present invention is formed with the pressure-sensitive adhesive composition of the present invention, the pressure-sensitive adhesive layer of the present invention is preferable from the viewpoint that the reliability is high in which the adhesive strength is stable even when the environment changes, the changes in adhesive strength due to the storage environment from immediately after filming are small, and the productivity is excellent.

A third aspect of the present invention provides a pressure-sensitive adhesive sheet having the pressure-sensitive adhesive layer of the present invention. Herein, the pressure-sensitive adhesive sheet of the third aspect of the present invention may be referred to as "the pressure-sensitive adhesive sheet of the present invention. Since the pressure-sensitive adhesive sheet of the present invention comprises the pressure-sensitive adhesive layer of the present invention, the pressure-sensitive adhesive sheet of the present invention is preferable from the viewpoint that the reliability is high in which the adhesive strength is stable even when the environment changes, the changes in adhesive strength due to the storage environment from immediately after the pressure-sensitive adhesive layer is formed are small, and the productivity is excellent.

A fourth aspect of the present invention provides an optical member with a pressure-sensitive adhesive layer, wherein the pressure-sensitive adhesive sheet of the present invention is laminated on at least one face of an optical member. Herein, the optical member with a pressure-sensitive adhesive layer of the fourth aspect of the present invention may be referred to as "the optical member with a pressure-sensitive adhesive layer of the present invention". Since the optical member with a pressure-sensitive adhesive layer of the present invention comprises the pressure-sensitive adhesive layer of the present invention, the optical member with a pressure-sensitive adhesive layer of the present invention is preferable from the viewpoint that the reliability is high in which the adhesive strength is stable even when the environment changes.

A fifth aspect of the present invention provides an image display device comprising the optical member with a pressure-sensitive adhesive layer of the present invention. Herein the image display device of the fifth aspect of the present invention may be referred to as "the image display device of the present invention". The image display device of the present invention may be a touch panel.

Since, in the image display device and the touch panel of the present invention, an optical member is laminated

with the pressure-sensitive adhesive layer of the present invention, the image display device and the touch panel of the present invention are preferable from the viewpoint that the reliability is high in which the adhesive strength is stable even when the environment changes, and the durability is excellent.

Advantageous Effects of Invention

The pressure-sensitive adhesive composition of the present invention can form a pressure-sensitive adhesive layer having high reliability in which the adhesive strength is stable even when the environment changes, having small changes in adhesive strength due to the storage environment from immediately after filming, and having excellent productivity. Accordingly, a high-performance image display device and a touch panel that have high reliability in which the adhesive strength is stable even when the environment changes and have excellent durability can be efficiently produced by laminating an optical member with the pressure-sensitive adhesive sheet comprising the pressure-sensitive adhesive layer formed of the pressure-sensitive adhesive composition of the present invention.

Brief Description of Drawings

[Figure 1] Figure 1 is a schematic view illustrating a specific example of a preferable form of the pressure-sensitive adhesive sheet of the present invention.
[Figure 2] Figure 2 is a schematic view illustrating a specific example of a preferable form of the optical member with a pressure-sensitive adhesive layer of the present invention.
[Figure 3] Figure 3 is a schematic view illustrating a specific example of a preferable form of the image display device of the present invention.
[Figure 4] Figure 4 is a schematic view illustrating a specific example of a preferable form of the touch panel of the present invention.
[Figure 5] Figure 5 is graphs showing the results of the adhesive strength measurement in Examples and Comparative Example. The graphs (a), (b), (c), and (d) show the results of Example 1, Example 2, Example 3, and Comparative Example 1, respectively.

Description of Embodiments

[1. Pressure-sensitive adhesive composition and pressure-sensitive adhesive layer]

The pressure-sensitive adhesive composition of the present invention is a pressure-sensitive adhesive composition for forming a pressure-sensitive adhesive layer used for laminating an optical member of an image display device, wherein
when a water absorption rate of the pressure-sensitive adhesive layer stored under conditions at 23°C 90% RH for 360 minutes is defined as X90 (%), the following formula (1) is satisfied.

$$X90 \leq 1.5\% \quad (1)$$

The pressure-sensitive adhesive composition of the present invention is used for forming a pressure-sensitive adhesive layer used, in an image display device such as a liquid crystal display (LCD) or an organic EL display (OLED), or a touch panel incorporating a touch sensor in such an image display device, for laminating an optical member such as a polarizing film, a retardation film, an optical compensation film, a touch sensor film, or a cover film on an image display panel or for laminating these optical members to each other.
The "image display device" referred to herein is intended to include a "touch panel", unless otherwise indicated.
The pressure-sensitive adhesive composition of the present invention is suitably used particularly for in-vehicle image display devices and touch panels. In-vehicle displays are often exposed to harsh environments such as high temperatures, high humidity, and sunlight for long periods of time, requiring high reliability to ensure that properties such as adhesive strength do not change easily even when the environment changes. In addition, there is another problem that, when the adhesive strength changes greatly due to the storage environment from immediately after the pressure-sensitive adhesive layer is formed, it is necessary to keep the pressure-sensitive adhesive layer until the adhesive strength stabilizes, which reduces productivity.
The reason why the adhesive strength changes due to the environment is believed that the change in the amount of moisture absorbed by the pressure-sensitive adhesive layer causes the swelling and shrinkage of the pressure-sensitive adhesive layer to increase, so that the elastic modulus changes, and moisture contained in the pressure-sensitive adhesive interacts with the polar groups on the surface of the pressure-sensitive adhesive, inhibiting the interaction of the polar groups on the pressure-sensitive adhesive surface and the polar groups on the surface of an object, which affects the adhesive strength. Accordingly, when the changes in the amount of moisture absorbed by the pressure-sensitive adhesive layer are small even when the environment changes, it is believed that the effects on the adhesive strength are small, thereby a pressure-sensitive adhesive layer having high reliability can be obtained.

The water absorption rate X90 is the proportion of water absorbed by the pressure-sensitive adhesive layer of the present invention in a high humidity environment of 90% RH. When the water absorption rate X90 is high, the swelling and shrinkage of the pressure-sensitive adhesive layer due to environmental changes becomes large, and moisture contained in the pressure-sensitive adhesive inhibits the interaction between the polar group on the surface of the pressure-sensitive adhesive and the polar group on the surface of an object, which may affect the adhesive strength. The configuration in which the water absorption rate X90 satisfies the above formula (1), that is, the water absorption rate X90 is 1.5% or less, is preferable in that a pressure-sensitive adhesive layer having high reliability in which the adhesive strength does not change easily in response to environmental changes such as temperature and humidity can be obtained. It is also preferable in that a pressure-sensitive adhesive layer having small changes in adhesive strength due to the storage environment from immediately after filming, and having excellent productivity can be obtained.

The water absorption rate X90 is preferably 1.4% or less, more preferably 1.3% or less, further preferably 1.2% or less, and may be 1.1% or less, in that a pressure-sensitive adhesive layer having high reliability in which the adhesive strength does not change easily in response to environmental changes, having small changes in adhesive strength due to the storage environment from immediately after filming, and having excellent productivity can be obtained. The lower limit value of the water absorption rate X90 is not particularly limited, and is preferable as it is lower, but may be 0.5% or more.

In the pressure-sensitive adhesive composition of the present invention, when a water absorption rate of the pressure-sensitive adhesive layer of the present invention stored under conditions at 23°C 25% RH for 240 minutes is defined as X25 (%), it is preferable that the following formula (2) is satisfied.

$$X90 - X25 \leq 1.5\% \quad (2)$$

The water absorption rate X25 is the proportion of water absorbed by the pressure-sensitive adhesive layer in a dry environment of 25% RH. When the difference between the X90 and the X25 is large, the amount of moisture contained in the pressure-sensitive adhesive layer changes greatly due to the environment, and the effect on the adhesive strength becomes large, which may reduce the reliability. The configuration in which the difference between the water absorption rate X90 and the water absorption rate X25 (X90 - X25) satisfies the above formula (2), that is, X90 - X25 is 1.5% or less, is preferable in that a pressure-sensitive adhesive layer having high reliability in which the adhesive strength does not change easily in response to environmental changes such as temperature and humidity, and usable in various environments can be obtained. It is also preferable in that a pressure-sensitive adhesive layer having small changes in adhesive strength due to the storage environment from immediately after filming, and having excellent productivity can be obtained.

The difference X90 - X25 is preferably 1.4% or less, more preferably 1.3% or less, further preferably 1.2% or less, and may be 1.1% or less or 1.0 or less, in that a pressure-sensitive adhesive layer having high reliability in which the adhesive strength does not change easily in response to environmental changes, usable in various environments, having small changes in adhesive strength due to the storage environment from immediately after filming, and having excellent productivity can be obtained. The lower limit value of the difference X90 - X25 is not particularly limited, and is preferable as it is lower, but may be 0.5% or more.

In the pressure-sensitive adhesive composition of the present invention, when a time reaching from a water absorption rate X75 (%) of the pressure-sensitive adhesive layer stored under conditions at 23°C 75% RH for 360 minutes to a half value of the water absorption rate X90 (%) of the pressure-sensitive adhesive layer stored under conditions at 23°C 90% RH for 360 minutes is defined as T90 (min), it is preferable that the following formula (3) is satisfied.

$$T90 \geq 16 \text{ min} \quad (3)$$

Herein, the "half value" is a half value of the water absorption rate reaching from X75 to X90, that is, the water absorption rate (%) represented by the formula: (X90 - X75)/2. The "time reaching to the half value" is a time reaching to the "half-value" described above, starting from the timepoint when storage is started under conditions of 23°C 90% RH. The same applies to the "half-values" in T25, T50 and, T75 described later.

The T90 is a time reaching from a water absorption rate X75 (%) of the pressure-sensitive adhesive layer stored

under conditions at 23°C 75% RH for 360 minutes to a half value of the water absorption rate X90 (%) of the pressure-sensitive adhesive layer stored under conditions at 23°C 90% RH for 360 minutes, and the amount of moisture changes (increases) most sharply in this time reaching to the half value. Thus, the longer the T90, the slower the moisture absorption speed, and a sharp change in adhesive strength can be prevented even when environment changes. The configuration in which the T90 satisfies the above formula (3), that is, the T90 is 16 minutes or more, is preferable in that sharp changes in adhesive strength due to environmental changes can be prevented, and the pressure-sensitive adhesive layer having high reliability can be obtained. It is also preferable in that a pressure-sensitive adhesive layer having small changes in adhesive strength due to the storage environment from immediately after filming, and having excellent productivity can be obtained.

The T90 is preferably 17 minutes or more, more preferably 18 minutes or more, further preferably 19 minutes or more, and may be 20 minutes or more, in that sharp changes in adhesive strength due to environmental changes can be prevented, and a pressure-sensitive adhesive layer having high reliability, having small changes in adhesive strength due to the storage environment from immediately after filming, and having excellent productivity can be obtained. The upper limit value of the T90 is not particularly limited, and is preferable as it is longer, but may be 60 minutes or less.

In the pressure-sensitive adhesive composition of the present invention, when a time reaching from an absolute dry state of the pressure-sensitive adhesive layer to a half value of the water absorption rate X25 (%) of the pressure-sensitive adhesive layer stored under conditions at 23°C 25% RH for 240 minutes is defined as T25 (min), it is preferable that the following formula (4) is satisfied.

$$T90/T25 \geq 1.0 \quad (4)$$

Here, the "absolute dry state" means a state in which the weight of the pressure-sensitive adhesive layer is not further reduced even when the pressure-sensitive adhesive layer is allowed to stand still under dry conditions. Herein, the pressure-sensitive adhesive layer stored under conditions at 150°C 0% RH for 60 minutes and then stored under conditions at 23°C 0% RH for 240 minutes is defined as an "absolute dry state" because the weight does not be substantially reduced even under further storage.

As the conditions has higher humidity, the slow moisture absorption speed of the pressure-sensitive adhesive layer can more prevent sharp changes in adhesive strength due to environmental changes. Thus, the pressure-sensitive adhesive layer can be used in various environments. The configuration in which the T90/T25 satisfies the above formula (4), that is, the T90/T25 is 1.0 or more, is preferable in that sharp changes in adhesive strength due to environmental changes can be prevented, and the pressure-sensitive adhesive layer having high reliability and usable in various environments can be obtained. It is also preferable that a pressure-sensitive adhesive layer having small changes in adhesive strength due to the storage environment from immediately after filming and having excellent productivity can be obtained.

The T90/T25 is preferably 1.1 or more, more preferably 1.2 or more, further preferably 1.3 or more, and may be 1.4 or more, in that sharp changes in adhesive strength due to environmental changes can be prevented, and the pressure-sensitive adhesive layer having high reliability, usable in various environments, having small changes in adhesive strength due to the storage environment from immediately after filming, and having excellent productivity can be obtained. The upper limit value of the T90/T25 is not particularly limited, and is preferable as it is higher, but may be 2.0 minutes or less.

The water absorption rate X25 is preferably 0.3% or less, more preferably 0.25% or less, further preferably 0.2% or less, and may be 0.15% or less, in that a pressure-sensitive adhesive layer having high reliability in which the adhesive strength does not change easily in response to environmental changes, having small changes in adhesive strength due to the storage environment from immediately after filming, and having excellent productivity can be obtained. The lower limit value of the water absorption rate X25 is not particularly limited, and is preferable as it is lower, but may be 0.01% or more.

When a water absorption rate of the pressure-sensitive adhesive layer of the present invention stored under conditions at 23°C 50% RH for 240 minutes is defined as X50(%), the water absorption rate X50 is preferably 0.8% or less, more preferably 0.7% or less, further preferably 0.6% or less, and may be 0.5% or less, in that a pressure-sensitive adhesive layer having high reliability in which the adhesive strength does not change easily in response to environmental changes, having small changes in adhesive strength due to the storage environment from immediately after filming, and having excellent productivity can be obtained. The lower limit value of the water absorption rate X50 is not particularly limited, and is preferable as it is lower, but may be 0.1% or more.

When a water absorption rate of the pressure-sensitive adhesive layer of the present invention stored under conditions at 23°C 75% RH for 360 minutes is defined as X75(%), the water absorption rate X75 is preferably 1.2% or less, more preferably 1.1% or less, further preferably 1.0% or less, and may be 0.9% or less, or 0.8% or less, in that a pressure-sensitive adhesive layer having high reliability in which the adhesive strength does not change easily in response

to environmental changes, having small changes in adhesive strength due to the storage environment from immediately after filming, and having excellent productivity can be obtained. The lower limit value of the water absorption rate X75 is not particularly limited, and is preferable as it is lower, but may be 0.3% or more.

The T25 is preferably 16 minutes or more, more preferably 17 minutes or more, further preferably 18 minutes or more, and may be 19 minutes or more, or 20 minutes or more, in that sharp changes in adhesive strength due to environmental changes can be prevented, and the pressure-sensitive adhesive layer having high reliability, having small changes in adhesive strength due to the storage environment from immediately after filming, and having excellent productivity can be obtained. The upper limit value of the T25 is not particularly limited, and is preferable as it is longer, but may be 60 minutes or less.

When a time reaching from a water absorption rate X25 (%) of the pressure-sensitive adhesive layer stored under conditions at 23°C 25% RH for 240 minutes to a half value of the water absorption rate X50 (%) of the pressure-sensitive adhesive layer stored under conditions at 23°C 50% RH for 240 minutes is defined as T50 (min), the T50 is preferably 16 minutes or more, more preferably 17 minutes or more, further preferably 18 minutes or more, and may be 19 minutes or more, or 20 minutes or more, in that sharp changes in adhesive strength due to environmental changes can be prevented, and the pressure-sensitive adhesive layer having high reliability, having small changes in adhesive strength due to the storage environment from immediately after filming, and having excellent productivity can be obtained. The upper limit value of the T50 is not particularly limited, and is preferable as it is longer, but may be 60 minutes or less.

When a time reaching from a water absorption rate X50 (%) of the pressure-sensitive adhesive layer stored under conditions at 23°C 50% RH for 240 minutes to a half value of the water absorption rate X75 (%) of the pressure-sensitive adhesive layer stored under conditions at 23°C 75% RH for 360 minutes is defined as T75 (min), the T75 is preferably 16 minutes or more, more preferably 17 minutes or more, further preferably 18 minutes or more, and may be 19 minutes or more, or 20 minutes or more, in that sharp changes in adhesive strength due to environmental changes can be prevented, and the pressure-sensitive adhesive layer having high reliability, having small changes in adhesive strength due to the storage environment from immediately after filming, and having excellent productivity can be obtained. The upper limit value of the T75 is not particularly limited, and is preferable as it is longer, but may be 60 minutes or less.

In the pressure-sensitive adhesive composition of the present invention, the water absorption rates X90, X25, X50, and X75 are determined by the rate of increase in the weight of the pressure-sensitive adhesive layer at the end of each storage condition, taking the weight of the pressure-sensitive adhesive layer in the absolute dry state as 100%.

When the maximum value is reached before the end point of each storage condition is reached, the water absorption rates X90, X25, X50, and X75 will indicate the saturated water absorption rate of each storage condition. When the maximum value is not reached before the end point of each storage condition is reached, the rate at the end point of each storage condition will be the maximum value instead of the saturated water absorption rate. The water absorption rates X90, X25, X50, and X75 may be saturated water absorption rates, but preferably are not saturated water absorption rates because the water absorption speed is slow and a sharp change of physical properties in the pressure-sensitive adhesive layer is prevented.

In the pressure-sensitive adhesive composition of the present invention, the water absorption rates X90, X25, X50, X75, X90 - X25, T90, T25, T50, T75, and T90/T25 are specifically those measured by the water absorption rate measurements and water absorption speed measurements in Examples mentioned below, and can be adjusted, for example, by the monomer composition (type, content, composition of a functional group-containing monomer, or the like) of a base polymer (in particular, acrylic polymer) described later, the type of a crosslinking agent and the amount thereof to be formulated, the type of a hydrogenated polyolefinic resin and the amount thereof to be formulated, and the like.

When an initial adhesive strength of the pressure-sensitive adhesive sheet of the present invention to a glass plate at 23°C, a tensile speed of 300 mm/min, a separation angle of 180°, and a separation length of 50 mm is defined as Y0 (N/20 mm), Y0 is, but not particularly limited to, preferably 16 N/20 mm or more, more preferably 17 N/20 mm or more, further preferably 18 N/20 mm or more, further more preferably 19 N/20 mm or more, from the viewpoint that the changes in adhesive strength in the storage environment are small and productivity is excellent. The upper limit value of the Y0 is not particularly limited to, but may be, for example, 60 N/20 mm or less. Herein, those measured within 12 hours after filming of the pressure-sensitive adhesive layer is included in the above-described "initial adhesive strength".

When an adhesive strength of the pressure-sensitive adhesive sheet of the present invention stored under conditions of 23°C 50% RH for 48 hours after the measurement of the initial adhesive strength Y0 to a glass plate at 23°C, a tensile speed of 300 mm/min, a separation angle of 180°, and a separation length of 50 mm is defined as Y48 (N/20 mm), Y48 is, but not particularly limited to, preferably 16 N/20 mm or more, more preferably 17 N/20 mm or more, further preferably 18 N/20 mm or more, further more preferably 19 N/20 mm or more, from the viewpoint that the changes in adhesive strength in the storage environment are small and productivity is excellent. The upper limit value of the Y48 is not particularly limited to, but may be, for example, 60 N/20 mm or less.

The change rate ((Y0 - Y48)/Y0 $\times$ 100) (%) of the adhesive strength Y48 to the initial adhesive strength Y0 of the pressure-sensitive adhesive sheet of the present invention is, but not particularly limited to, preferably within $\pm$10%, more preferably within $\pm$9%, further preferably within $\pm$8%, and may be within $\pm$7% from the viewpoint that the changes

in adhesive strength in the storage environment are small and the productivity is excellent.

In the pressure-sensitive adhesive composition of the present invention, the adhesive strengths Y0, Y48 and the change rates thereof are specifically those measured by the adhesive strength measurements in Examples mentioned below, and can be adjusted, for example, by the monomer composition (type, content, composition of a functional group-containing monomer, or the like) of a base polymer (in particular, acrylic polymer) described later, the type of a crosslinking agent and the amount thereof to be formulated, the type of a hydrogenated polyolefinic resin and the amount thereof to be formulated, and the like.

In the pressure-sensitive adhesive layer of the present invention, without particular limitation, the dielectric constant thereof is preferably controlled low from the viewpoint of preventing a malfunction of a touch panel having the pressure-sensitive adhesive layer. In the pressure-sensitive adhesive layer of the present invention, the dielectric constant at the frequency of 100 kHz is preferably 4 or less, more preferably 3.9 or less, further preferably 3.8 or less. The lower limit value of the dielectric constant at the frequency of 100 kHz is, but not particularly limited to, preferably 2.3 or more, more preferably 2.4 or more, further preferably 2.5 or more.

The dielectric constant of the pressure-sensitive adhesive layer of the present invention is those measured in accordance with JIS K 6911, and can be adjusted, for example, by the monomer composition (type, content, composition of a functional group-containing monomer, or the like) of a base polymer (in particular, acrylic polymer) described later, the type of a crosslinking agent and the amount thereof to be formulated, the type of a hydrogenated polyolefinic resin and the amount thereof to be formulated, and the like.

Since the pressure-sensitive adhesive layer of the present invention is used for laminating an optical member of an image display device, it has excellent transparency. For this reason, the visibility and appearance through the pressure-sensitive adhesive layer of the present invention are excellent.

The haze of the pressure-sensitive adhesive layer of the present invention (in accordance with JIS K 7136) is, but not particularly limited to, preferably 1.0% or less, more preferably 0.8% or less. A haze of 1.0% or less is preferable because excellent transparency and excellent appearance can be obtained. The lower limit value of the haze is, but not particularly limited to, theoretically 0%, and may be practically more than 0.01%. The haze described above can be measured, for example, on a specimen made by allowing the pressure-sensitive adhesive layer (thickness: 100 pm) to stand under normal conditions (23°C, 50% RH) for at least 24 hours and then laminating the layer on slide glass (e.g., one having a total light transmittance of 92% and a haze of 0.2%), by use of a haze meter (manufactured by Murakami Color Research Laboratory Co., Ltd., trade name "HM-150N") or an equivalent thereof.

The total light transmittance in the visible light wavelength region of the pressure-sensitive adhesive layer of the present invention (in accordance with JIS K 7361-1) is, but not particularly limited to, preferably 90% or more, more preferably 91% or more, further preferably 92% or more. A case in which the total light transmittance is 90% or more is preferable because excellent transparency and an excellent appearance can be obtained. The upper limit value of the total light transmittance is, but not particularly limited to, theoretically a value obtained by subtracting the optical loss due to the reflection occurring at the air interface (Fresnel Loss) from 100%, and may be practically 95% or less. The total light transmittance described above can be measured, for example, on a specimen made by allowing the pressure-sensitive adhesive layer (thickness: 100 pm) to stand under normal conditions (23°C, 50% RH) for at least 24 hours, then, if the layer has a release liner, separating the release liner, and laminating the layer on slide glass (e.g., one having a total light transmittance of 92% and a haze of 0.2%), by use of a haze meter (manufactured by Murakami Color Research Laboratory Co., Ltd., trade name "HM-150N") or an equivalent thereof.

The thickness of the pressure-sensitive adhesive layer of the present invention is, but not particularly limited to, preferably from 12 to 350 μm, more preferably from 12 to 300 um. A case in which the thickness is equal to or larger than a certain thickness is preferable because, in a touch panel in which an optical member (touch sensor film) having metal wiring such as a metal mesh film or silver nanowire film is laminated, the stress to the metal wiring is sufficiently relaxed to enable display irregularities to be prevented. A case in which the thickness is equal to or smaller than a certain thickness is preferable because the handleability and manufacturability are particularly excellent.

The method for producing the pressure-sensitive adhesive layer of the present invention is not particularly limited. Examples of the producing method include a method including producing the pressure-sensitive adhesive composition of the present invention (precursor composition), applying (coating) the pressure-sensitive adhesive composition on a substrate or release liner, and if necessary, conducting irradiation with active energy rays, heat-drying, or the like.

The pressure-sensitive adhesive composition of the present invention may have any form, and examples thereof include an emulsion type, a thermofusible type (hot-melt type), a solventless type (active energy ray-curable type, e.g., a monomer mixture, or a monomer mixture and a partially polymerized product thereof). Particularly, the pressure-sensitive adhesive composition of the present invention is preferably not a solvent type. This is because defects in the appearance, such as orange peel, are likely to occur when a pressure-sensitive adhesive layer is attempted to be obtained by use of a solvent-type pressure-sensitive adhesive composition. "Orange peel" refers to a phenomenon in which unevenness like the skin of yuzu, a type of citrus fruit, occurs. The pressure-sensitive adhesive composition of the present invention is preferably an active energy ray-curable type in respect of obtaining a pressure-sensitive adhesive

layer excellent in appearance. Herein, the pressure-sensitive adhesive composition means a composition to be used for forming the pressure-sensitive adhesive and is intended to include the meaning of a composition to be used for forming the pressure-sensitive adhesive.

The pressure-sensitive adhesive composition of the present invention is preferably not a solvent type, as described above, that is, is free of or substantially free of an organic solvent.

The organic solvent described above is not particularly limited as long as being an organic compound used as a solvent, and examples thereof include hydrocarbon solvents such as cyclohexane, hexane, and heptane; aromatic solvents such as toluene and xylene; ester solvents such as ethyl acetate and methyl acetate; ketone solvents such as acetone and methyl ethyl ketone; and alcohol solvents such as methanol, ethanol, butanol, and isopropyl alcohol. The organic solvent may be a mixed solvent including two or more organic solvents.

In the pressure-sensitive adhesive composition of the present invention, the phrase "substantially free of" an organic solvent refers to actively formulating no organic solvent except when an organic solvent is inevitably mixed. Specifically, it can be said that one in which the content of the organic solvent in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free thereof.

The halogen ion concentration of the pressure-sensitive adhesive composition of the present invention is preferably 50 ppm or less. This configuration is preferable from the viewpoint that a corrosion prevention effect on metal wiring can be obtained in a touch panel in which an optical member (touch sensor film) having metal wiring such as a metal mesh film or silver nanowire film is laminated. It can be said that one in which the content of a halogen ion is preferably 50 ppm or less (e.g., from 0 to 50 ppm), more preferably 40 ppm or less (e.g., from 0 to 40 ppm), and further preferably 30 ppm or less (e.g., from 0 to 30 ppm), based on the total amount of the pressure-sensitive adhesive composition described above is substantially free of a halogen ion.

The pressure-sensitive adhesive composition of the present invention is preferably free of or substantially free of a carboxyl group-containing monomer as a monomer component constituting the polymer. For this reason, a corrosion prevention effect on metal wiring can be obtained in a touch panel in which an optical member (touch sensor film) having metal wiring such as a metal mesh film or silver nanowire film is laminated. It can be said that one in which the content of a carboxyl group-containing monomer is preferably 1 $ng/cm^2$ or less (e.g., from 0 to 1 $ng/cm^2$), more preferably 0.8 $ng/cm^2$ or less (e.g., from 0 to 0.8 $ng/cm^2$), further preferably 0.5 $ng/cm^2$ or less (e.g., from 0 to 0.5 $ng/cm^2$) based on the total amount of the pressure-sensitive adhesive composition described above is substantially free of a carboxyl group-containing monomer. Examples of the carboxyl group-containing monomer described above include (meth)acrylic acid, itaconic acid, maleic acid, fumaric acid, crotonic acid, and isocrotonic acid. In the carboxyl group-containing monomers described above, acid anhydride group-containing monomers such as maleic anhydride and itaconic anhydride are also included.

The halogen ion content and carboxyl group-containing monomer content of the pressure-sensitive adhesive composition of the present invention are those that can be measured by an energy-dispersive fluorescence X-ray analyzer, ion chromatography, and the like, and can be adjusted, for example, by the monomer composition (type, content, composition of a functional group-containing monomer, or the like) of a base polymer (in particular, acrylic polymer) described later, the type of a crosslinking agent and the amount thereof to be formulated, the type of a hydrogenated polyolefinic resin and the amount thereof to be formulated, and the like.

The base polymer contained in the pressure-sensitive adhesive composition of the present invention is not particularly limited, but example thereof include an acrylic polymer contained as the base polymer in an acrylic pressure-sensitive adhesive layer, a rubber polymer contained as the base polymer in a rubber pressure-sensitive adhesive layer (such as a natural rubber pressure-sensitive adhesive layer or a synthetic rubber pressure-sensitive adhesive layer), a silicone polymer contained as the base polymer in a silicone pressure-sensitive adhesive layer, a polyester polymer contained as the base polymer in a polyester pressure-sensitive adhesive layer, a urethane polymer contained as the base polymer in a urethane pressure-sensitive adhesive layer, a polyamide polymer contained as the base polymer in a polyamide pressure-sensitive adhesive layer, an epoxy polymer contained as the base polymer in an epoxy pressure-sensitive adhesive layer, a vinylalkyl ether polymer contained as the base polymer in a vinylalkyl ether pressure-sensitive adhesive layer, and a fluorine polymer contained as the base polymer in a fluorine pressure-sensitive adhesive layer. Of these, an acrylic polymer is preferably as the base polymer, in respect of the transparency, weatherability, adhesion reliability, ease of function design of the pressure-sensitive adhesive layer due to abundance of types of monomers, and the like. In other words, the pressure-sensitive adhesive composition of the present invention is preferably an acrylic pressure-sensitive adhesive composition containing an acrylic polymer mentioned below as the base polymer. The base polymer may be used singly or in combination of two or more.

The content of the base polymer in the pressure-sensitive adhesive composition of the present invention is, but not particularly limited to, preferably 75% by weight or more (e.g., from 75 to 99.9% by weight), more preferably 85% by weight or more (e.g., from 85 to 99.9% by weight).

When the pressure-sensitive adhesive composition of the present invention is an acrylic pressure-sensitive adhesive composition containing an acrylic polymer as the base polymer, it may be referred to as the "acrylic pressure-sensitive adhesive composition of the present invention".

Hereinafter, the acrylic pressure-sensitive adhesive composition of the present invention will be described in more detail, but the present invention is not intended to be limited to this.

[1-1. Acrylic polymer]

The acrylic pressure-sensitive adhesive composition of the present invention is a pressure-sensitive adhesive composition containing an acrylic polymer as the base polymer. Such acrylic polymers may be used singly or in combination of two or more. The acrylic pressure-sensitive adhesive composition of the present invention may contain, in addition to the acrylic polymer, a hydrogenated polyolefinic resin, a polyfunctional (meth)acrylate, a silane coupling agent, and other additives mentioned below.

The content of the acrylic polymer is, but not particularly limited to, preferably 60% by weight or more (e.g., from 60 to 99.9% by weight), more preferably 70% by weight or more (e.g., from 70 to 99.9% by weight) based on the total amount of the acrylic pressure-sensitive adhesive composition of the present invention (total weight, 100% by weight).

Examples of the acrylic pressure-sensitive adhesive composition of the present invention that forms the pressure-sensitive adhesive layer containing the acrylic polymer as the main component include, but not particularly limited to, compositions containing the acrylic polymer as an essential component; compositions containing a mixture of monomer components constituting the acrylic polymer (may be referred to as a "monomer mixture") or a partially polymerized product thereof as an essential component. Without particular limitation, examples of the former include so-called water-dispersible compositions (emulsion compositions), and examples of the latter include so-called active energy ray-curable compositions. Of these, the acrylic pressure-sensitive adhesive composition of the present invention is preferably a composition containing a monomer mixture or a partially polymerized product thereof as an essential component.

Herein, the "mixture of monomer components" described above is intended to include a case in the mixture is constituted by a single monomer component and a case in which the mixture is constituted by two or more monomer components. The "partially polymerized product of the mixture of monomer components" described above means a composition in which one or two or more monomer components of the constituent monomer components of the "mixture of monomer components" described above are partially polymerized.

The "acrylic polymer" referred to herein is intended to include an "acrylic polymer", a "mixture of monomer components constituting the acrylic polymer", and a "partially polymerized product of the mixture of monomer components constituting the acrylic polymer", unless otherwise indicated.

The acrylic polymer is a polymer containing a constituent unit derived from an acrylic monomer as a constituent unit. Herein, "(meth)acryl" represents either one or both of "acryl" and" methacryl", and the same applies to the following. The weight average molecular weight of the acrylic polymer is, but not particularly limited to, preferably from 100000 to 5000000.

In the acrylic pressure-sensitive adhesive composition of the present invention, the acrylic polymer is preferably a polymer containing a (meth)acrylic alkyl ester having a linear- or branched-chain alkyl group (hereinafter, may be simply referred to as "(meth)acrylic alkyl ester") as a monomer unit.

Examples of the (meth)acrylic alkyl ester include (meth)acrylic alkyl esters of which the alkyl group has 1 to 24 carbon atoms such as methyl (meth)acrylate, ethyl (meth)acrylate, propyl (meth)acrylate, isopropyl (meth)acrylate, butyl (meth)acrylate (n-butyl (meth)acrylate), isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, isostearyl (meth)acrylate, nonadecyl (meth)acrylate, and eicosyl (meth)acrylate. The (meth)acrylic alkyl esters may be used singly or in combination of two or more.

As the (meth)acrylic alkyl ester, an acrylic alkyl ester is more preferable than a methacrylic alkyl ester, in respect that the polymerization time of the acrylic polymer is reduced to enable the productivity to be improved. Particularly when the acrylic polymer of the present invention is cured by radiation polymerization, an acrylic alkyl ester is suitable.

Among them, the (meth)acrylic alkyl ester is preferably an (meth)acrylic alkyl ester of which the alkyl group has 1 to 18 carbon atoms, more preferably methyl methacrylate (MMA), butyl acrylate (BA), 2-ethylhexyl acrylate (2EHA), isostearyl acrylate (ISTA), further preferably 2-ethylhexyl acrylate (2EHA) and isostearyl acrylate (ISTA), in respect of obtaining strong adhesiveness and adjusting residual stress.

The content (proportion) of the (meth)acrylic alkyl ester described above in the total monomer units of the acrylic polymer (the total amount of the monomer components constituting the acrylic polymer) is, but not particularly limited to, preferably 30 to 90 parts by weight, more preferably 35 to 85 parts by weight, further preferably 40 to 80 parts by

weight based on the total amount of the monomer components constituting the acrylic polymer (100 parts by weight), in respect of improving the durability and obtaining high adhesion reliability.

The "total amount of the monomer components constituting the acrylic polymer" referred to herein is intended to include a monomer component added to the acrylic pressure-sensitive adhesive composition containing an acrylic polymer for a purpose such as adjusting the elastic modulus of the pressure-sensitive adhesive layer, or the like in the acrylic pressure-sensitive adhesive composition of the present invention.

In a preferred embodiment of the acrylic pressure-sensitive adhesive composition of the present invention, the acrylic polymer is preferably a polymer containing a (meth)acrylic alkyl ester (which may be referred to as "(meth)acrylic alkyl ester (A)") having an alkyl group having 8 or more carbon atoms (a medium chain to long chain alkyl group) as an essential monomer unit. The acrylic polymer is preferable in that, due the action of the medium chain to long chain alkyl group, a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

In the present embodiments, examples of the (meth)acrylic alkyl ester (A) include (meth)acrylic alkyl esters of which the alkyl group has 8 or more carbon atoms (preferably 8 to 24 carbon atoms) such as octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, isostearyl (meth)acrylate, nonadecyl (meth)acrylate, and eicosyl (meth)acrylate. The (meth)acrylic alkyl esters (A) may be used singly or in combination of two or more.

In the present embodiments, as the (meth)acrylic alkyl ester (A), an acrylic alkyl ester is more preferable than a methacrylic alkyl ester, in respect that the polymerization time of the acrylic polymer (A) is reduced to enable the productivity to be improved. Particularly when the acrylic polymer of the present invention is cured by radiation polymerization, an acrylic alkyl ester is suitable.

Of these, in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented, as the (meth)acrylic alkyl ester (A), a (meth)acrylic alkyl ester having a branched-chain alkyl group having 8 or more carbon atoms is preferably contained, a (meth)acrylic alkyl ester having a branched-chain alkyl group having 8 or 9 carbon atoms is preferably contained, 2-ethylhexyl (meth)acrylate is further preferably contained, and 2-ethylhexyl acrylate (2EHA) is particularly preferably contained. The number of carbon atoms in the side chain alkyl group of the branched-chain alkyl group described above is not particularly limited, and alkyl groups having 1 to 3 carbon atoms (e.g., a methyl group, an ethyl group, a n-propyl group, and an isopropyl group) are preferable. The "side chain alkyl group" is an alkyl group to be substituted at the side group of the carbon chain having the largest number of carbon atoms.

In the present embodiments, the content (proportion) of the (meth)acrylic alkyl ester (A) described above in the total monomer units of the acrylic polymer (the total amount of the monomer components constituting the acrylic polymer) is, but not particularly limited to, preferably from 30 to 99 parts by weight, more preferably from 35 to 95 parts by weight, further preferably from 40 to 90 parts by weight based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

In the present embodiments, when the (meth)acrylic alkyl ester (A) contains a (meth)acrylic alkyl ester having a branched-chain alkyl group having 8 or 9 carbon atoms (hereinafter, may be referred to as a (meth)acrylic alkyl ester (A1) herein), a (meth)acrylic alkyl ester having a branched-chain alkyl group having 10 to 24 carbon atoms (hereinafter, may be referred to as a (meth)acrylic alkyl ester (A2) herein) is preferably further contained.

In the present embodiments, a case in which the (meth)acrylic alkyl ester (A) contains the (meth)acrylic alkyl ester (A2) in addition to the (meth)acrylic alkyl ester (A1) is preferable in that the dielectric constant of the pressure-sensitive adhesive layer of the present invention can be reduced due to the action of the long-chain branched-chain alkyl group and, even in the case of lamination on an optical member (touch sensor film) including a layer of metal wiring such as metal mesh wiring or silver nanowire formed, a malfunction can be prevented because the low dielectric constant of the pressure-sensitive adhesive layer.

The Tg of the homopolymer of the (meth)acrylic alkyl ester (A2) is preferably from -80 to 0°C, further preferably from -70 to -10°C. A Tg of homopolymer of - 80°C or less is not preferable because the modulus of elasticity of the pressure-sensitive adhesive layer at normal temperature may decrease excessively, and a case of a Tg exceeding 0°C is not preferable because the adhesive strength may decrease. The Tg of the homopolymer is a value measured with a differential scanning calorimeter (DSC). Although the branched-chain alkyl group having 10 to 24 carbon atoms has 10 to 24 carbon atoms in the view of satisfying a moderate low dielectric constant and elastic modulus, an alkyl (meth)acrylate having a preferable alkyl group can be selected as appropriate in accordance with a method for producing a

(meth)acrylic polymer. For example, when a (meth)acrylic polymer is produced by solution polymerization or the like, the alkyl group has further preferably 10 to 18 carbon atoms, further preferably 10 to 16 carbon atoms, further preferably 10 to 14 carbon atoms. When the acrylic polymer is produced by radiation polymerization or the like, the alkyl group has further preferably 12 to 18 carbon atoms, further preferably 14 to 18 carbon atoms.

Examples of the (meth)acrylic alkyl ester (A2) can include isodecyl acrylate (number of carbon atoms: 10, Tg of homopolymer = -60°C, hereinafter, simply abbreviated as Tg), isodecyl methacrylate (number of carbon atoms: 10, Tg = -41°C), isomyristyl acrylate (number of carbon atoms: 14, Tg = -56°C), isostearyl acrylate (number of carbon atoms: 18, Tg = -18°C), 2-propylheptyl acrylate, isoundecyl acrylate, isododecyl acrylate, isotridecyl acrylate, isopentadecyl acrylate, isohexadecyl acrylate, isoheptadecyl acrylate, and the methacrylate monomers exemplified. The (meth)acrylic alkyl esters (A2) may be used singly or in combination of two or more.

Among the branched-chain alkyl groups having 10 to 24 carbon atoms, ones having a branched-chain alkyl group such as a t-butyl group at the end of the ester group are particularly preferable in that it is considered that the molar volume increases, the dipole moment decreases, and a pressure-sensitive adhesive layer having a balance between the both can be obtained. As the branched-chain alkyl group provided at the end of the ester group, branched-chain alkyl groups having 4 to 6 carbon atoms such as a neopentyl group and a t-pentyl group are preferable, and a t-butyl group is particularly preferable. A preferable example of the (meth)acrylic alkyl ester (A2) having a t-butyl group at the end of the ester group includes isostearyl acrylate represented by the following formula.

[Formula 1]

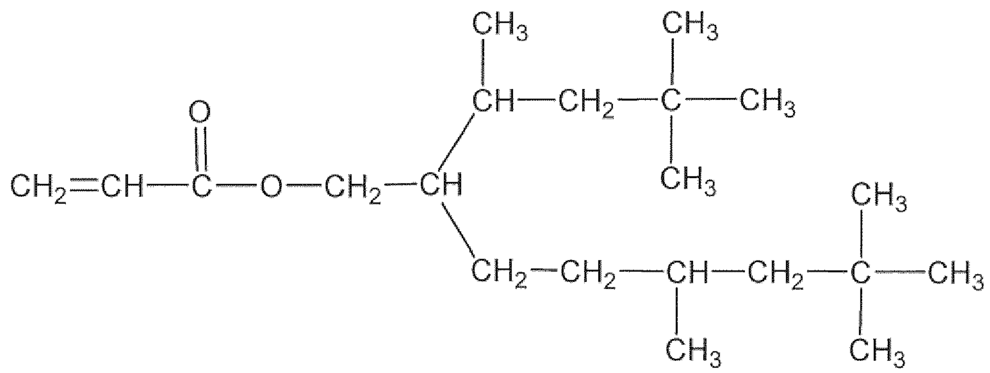

In the present embodiments, the content (proportion) of the (meth)acrylic alkyl ester (A1) described above in the total monomer units of the acrylic polymer (the total amount of the monomer components constituting the acrylic polymer) is, but not particularly limited to, preferably 30 parts by weight or more, more preferably 35 parts by weight or more, further preferably 40 parts by weight or more, and may be 45 parts by weight or more based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented. The content described above is preferably 70 parts by weight or less, more preferably 65 parts by weight or less, further preferably 60 parts by weight or less, from the viewpoint of allowing the pressure-sensitive adhesive layer to have a low dielectric constant to thereby prevent a malfunction.

In the present embodiments, the content (proportion) of the (meth)acrylic alkyl ester (A2) described above in the total monomer units of the acrylic polymer (100 parts by weight of the total amount of the monomer components constituting the acrylic polymer) is, but not particularly limited to, preferably 10 parts by weight or more, more preferably 15 parts by weight or more, further preferably 20 parts by weight or more, and may be 30 parts by weight or more or 40 parts by weight or more, from the viewpoint of allowing the pressure-sensitive adhesive layer to have a low dielectric constant to thereby prevent a malfunction. The content described above is preferably 50 parts by weight or less, more preferably 40 parts by weight or less, further preferably 35 parts by weight or less, particularly preferably 30 parts by weight or less, in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

The weight ratio of the (meth)acrylic alkyl ester (A2) to the (meth)acrylic alkyl ester (A1) described above (the (meth)acrylic alkyl ester (A2)/the (meth)acrylic alkyl ester (A1)) in the acrylic polymer of the present embodiments is, but not particularly limited to, preferably 2 or less, more preferably 1.5 or less, further preferably 1 or less, particularly

preferably 0.5 or less, and may be 0.45 or less, in respect that a highly-flexible pressure-sensitive adhesive layer can be achieved, and, even when an optical member (touch sensor film) having metal wiring such as a metal mesh film or silver nanowire film is laminated, the stress to the metal wiring is sufficiently relaxed to enable display irregularities to be prevented. The ratio described above is preferably 0.2 or more, more preferably 0.25 or more, further preferably 0.3 or more, and may be 0.35 or more, from the viewpoint of allowing the pressure-sensitive adhesive layer to have a low dielectric constant to thereby prevent a malfunction.

In the present embodiments, the acrylic polymer may contain a (meth)acrylic alkyl ester other than the (meth)acrylic alkyl ester (A) (hereinafter, may be referred to as the "(meth)acrylic alkyl ester (B)") as a monomer component. Examples of the (meth)acrylic alkyl ester (B) described above include (meth)acrylic alkyl esters having a linear- or branched-chain alkyl group having 1 to 7 carbon atoms. The (meth)acrylic alkyl esters (B) may be used singly or in combination of two or more.

In the present embodiments, the content (proportion) of the (meth)acrylic alkyl ester (B) described above in the total monomer units of the acrylic polymer (the total amount of the monomer components constituting the acrylic polymer)is, but not particularly limited to, preferably 10 parts by weight or less, more preferably 5 parts by weight or less based on the total amount of the monomer components constituting the acrylic polymer (100 parts by weight), in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

In the acrylic pressure-sensitive adhesive composition according to the present invention, the acrylic polymer may contain a functional group-containing monomer that can be copolymerized (copolymerizable functional group-containing monomer) as a monomer unit in addition to the (meth)acrylic alkyl ester (including (meth)acrylic alkyl ester (A) and (meth)acrylic alkyl ester (B)) described above. That is, the acrylic polymer may contain a functional group-containing monomer as a constituent monomer component. The functional group-containing monomers may be used singly or in combination of two or more.

The content (proportion) of the functional group-containing monomer described above in the total amount of the monomer components constituting the acrylic polymer (100 parts by weight) is, but not particularly limited to, preferably 5 to 40 parts by weight, more preferably 10 to 30 parts by weight, further preferably 15 to 25 parts by weight, in respect that a pressure-sensitive adhesive layer having high reliability in which the adhesive strength does not change easily in response to environmental changes, having small changes in adhesive strength due to the storage environment from immediately after filming, and having excellent productivity can be obtained.

Preferred examples of the functional group-containing monomer include, but are not particularly limited to, a monomer having a nitrogen atoms in the molecule (referred to as "nitrogen atom-containing monomer"), and a monomer having a hydroxyl group in the molecule (referred to as "hydroxyl group-containing monomer") in respect of controlling the various properties of the pressure-sensitive adhesive layer described above (in particular, water absorption rate, water absorption speed, or the like) to a predetermined range, obtaining a pressure-sensitive adhesive layer having high reliability in which the adhesive strength does not change easily in response to environmental changes, adhesion reliability, compatibility with various additives such as a UV absorbing agent, and transparency. That is, the acrylic polymer preferably contains a nitrogen atom-containing monomer as a constituent unit. It is also preferable that the acrylic polymer contains a hydroxyl group-containing monomer as a constituent unit.

When the acrylic polymer contains a nitrogen atom-containing monomer as a monomer unit, moderate cohesion is more easily obtained, so that a 180° (degree) peel adhesive strength to a glass plate is increased, thereby strong adhesiveness and excellent foaming and peeling resistance are more easily obtained. Further, the moderate flexibility is more easily obtained via the pressure-sensitive adhesive layer, and even when the 300% tensile residual stress is adjusted within a specific range and an optical member (touch sensor film) having metal wiring such as a metal mesh film or silver nanowire film is laminated, the stress to the metal wiring is sufficiently relaxed to enable display irregularities to be prevented.

When the acrylic polymer described above contains the nitrogen atom-containing monomer described above as a monomer component constituting the polymer, the proportion of the nitrogen atom-containing monomer in the total monomer components constituting the acrylic polymer (100% by weight) is, but not particularly limited to, preferably 1% by weight or more, more preferably 3% by weight or more, further preferably 5% by weight or more, and may be 10% by weight or more or 15% by weight or more. A case in which the proportion is 1% by weight or more is preferable in respect of controlling the various properties of the pressure-sensitive adhesive layer described above (in particular, water absorption rate, water absorption speed, or the like) to a predetermined range, obtaining a pressure-sensitive adhesive layer having high reliability in which the adhesive strength does not change easily in response to environmental changes, and obtaining high adhesion reliability. The upper limit of the proportion of the nitrogen atom-containing monomer is preferably 30% by weight or less, more preferably 25% by weight or less, further preferably 20% by weight or less, in respect of obtaining a pressure-sensitive adhesive layer having moderate flexibility, obtaining a pressure-sensitive adhesive layer excellent in transparency, controlling the various properties of the pressure-sensitive adhesive layer

described above (in particular, water absorption rate, water absorption speed, or the like) to a predetermined range, and obtaining a pressure-sensitive adhesive layer having high reliability in which the adhesive strength does not change easily in response to environmental changes.

When the acrylic polymer contains a hydroxyl group-containing monomer as a monomer unit, polymerization is facilitated on polymerizing the constituent monomer components, and favorable cohesion is more easily obtained. Thus, strong adhesiveness is more easily obtained, thereby excellent foaming and peeling resistance are more easily obtained.

When the acrylic polymer described above contains the hydroxyl group-containing monomer described above as a monomer component constituting the polymer, the proportion of the hydroxyl group-containing monomer in the total monomer components constituting the acrylic polymer (100% by weight) is, but not particularly limited to, preferably 10% by weight or less. When the acrylic polymer contains many hydroxyl group-containing monomers, the water absorption property of the pressure-sensitive adhesive layer tends to increase because the hydroxyl group has high affinity with water. The configuration in which the proportion of the hydroxyl group-containing monomer is 10% by weight or less in the acrylic polymer is preferable in that changes in water absorption rate of the pressure-sensitive adhesive layer of the present invention due to the environments is controlled to be small, and a pressure-sensitive adhesive layer having high reliability in which the adhesive strength does not change easily in response to environmental changes, having small changes in adhesive strength due to the storage environment from immediately after filming, and having excellent productivity can be obtained.

The proportion of the hydroxyl group-containing monomer is more preferably 8% by weight or less, and further preferably 6% by weight or less, in that changes in water absorption rate of the pressure-sensitive adhesive layer of the present invention due to the environments is controlled to be small, and a pressure-sensitive adhesive layer having high reliability in which the adhesive strength does not change easily in response to environmental changes, having small changes in adhesive strength due to the storage environment from immediately after filming, and having excellent productivity can be obtained. The lower limit of the proportion of the hydroxyl group-containing monomer described above is preferably 0.5% by weight or more, more preferably 0.8% by weight or more, further preferably 1% by weight or more in respect of obtaining high adhesion reliability and capability to be a reaction point with a crosslinking agent.

The total of the proportions of the nitrogen atom-containing monomer and the hydroxyl group-containing monomer in the total monomer components constituting the acrylic polymer (100% by weight) is, but not particularly limited to, preferably 5% by weight or more, more preferably 10% by weight or more, further preferably 15% by weight or more in respect of obtaining a pressure-sensitive adhesive layer having high reliability in which the adhesive strength does not change easily in response to environmental changes and obtaining high adhesion reliability. The upper limit of the total of the proportions described above is preferably 40% by weight or less, more preferably 30% by weight or less, further preferably 25% by weight or less, in respect of obtaining a sealing material layer having moderate flexibility, obtaining a sealing material layer excellent in transparency, and easily controlling the various properties of the sealing material layer described above (in particular, water absorption rate, water absorption speed, or the like) to a predetermined range.

The proportion of the nitrogen atom-containing monomer to the hydroxyl group-containing monomer (nitrogen atom-containing monomer/hydroxyl group-containing monomer) in the acrylic polymer is, but not particularly limited to, preferably 1 to 50, more preferably 1.5 to 40, further preferably 2 to 30, particularly preferably 2 to 25. The configuration in which the proportion is 1 or more is preferable in that changes in water absorption rate of the pressure-sensitive adhesive layer of the present invention due to the environments is controlled to be small, and a pressure-sensitive adhesive layer having high reliability in which the adhesive strength does not change easily in response to environmental changes, having small changes in adhesive strength due to the storage environment from immediately after filming, and having excellent productivity can be obtained. The configuration in which the proportion is 50 or less is preferable in that the hydroxyl group derived from the hydroxyl group-containing monomer can be the reaction point of the crosslinking agent mentioned below.

The acrylic polymer described above can be obtained by polymerizing the monomer unit (monomer component) described above by a known or customary polymerization method. Examples of the method for polymerizing the acrylic polymer include a solution polymerization method, an emulsion polymerization method, a bulk polymerization method, and a polymerization method by an active energy-ray irradiation (active energy-ray polymerization method). Of these, in respect of transparency, water resistance, costs, and the like of the pressure-sensitive adhesive layer, the solution polymerization method and active energy-ray polymerization method are preferable, and the active energy-ray polymerization method is more preferable.

In polymerization of the acrylic polymer, various common solvents may be used. The solvents may be used singly or in combination of two or more.

In polymerization of the acrylic polymer, a polymerization initiator such as a thermal polymerization initiator or a photopolymerization initiator (photoinitiator) may be used depending on the type of polymerization reaction. The polymerization initiators may be used singly or in combination of two or more.

The amount of the photopolymerization initiator described above to be used is, but not particularly limited to, for example, preferably from 0.001 to 1 part by weight, more preferably from 0.01 to 0.50 parts by weight based on 100 parts by weight of the total monomer units of the acrylic polymer (the total amount of the monomer components constituting the acrylic polymer).

[1-2. Hydroxyl group-containing monomer]

A hydroxyl group-containing monomer means a monomer having at least one hydroxyl group in the molecule. A monomer having at least one hydroxyl group in the molecule and having at least one carboxyl group in the molecule is a carboxyl group-containing monomer and is intended not to be a hydroxyl group-containing monomer. The hydroxyl group-containing monomer described above is not particularly limited, but preferably hydroxyl group-containing (meth)acrylic esters, more preferably 2-hydroxyethyl acrylate (HEA), 2-hydroxypropyl (meth)acrylate (HPA), and 4-hydroxybutyl acrylate (4-HBA), from the viewpoint that favorable cohesion is more easily obtained and adhesion reliability at high temperatures is more easily obtained. The hydroxyl group-containing monomers may be used singly or in combination of two or more.

[1-3. Nitrogen atom-containing monomer]

A nitrogen atom-containing monomer means a monomer having at least one nitrogen atom in the molecule (in one molecule). However, the nitrogen atom-containing monomer described above is intended not to be included in the hydroxyl group-containing monomers described above. That is, herein, a monomer having a hydroxyl group and a nitrogen atom in the molecule is intended to be included in the nitrogen atom-containing monomer. A monomer having at least one nitrogen atom in the molecule and having at least one carboxyl group in the molecule is intended to be a carboxyl group-containing monomer and not to be a nitrogen atom-containing monomer. As the nitrogen atom-containing monomer described above, from the viewpoint of improving foaming and peeling resistance, N-vinyl cyclic amides, (meth)acrylamides, and the like are preferable. The nitrogen atom-containing monomers may be used singly or in combination of two or more.

As the N-vinyl cyclic amide described above, N-vinyl cyclic amides represented by the following formula (1) are preferable from the viewpoint that favorable cohesion is more easily obtained and adhesion reliability at high temperatures is more easily obtained.

[Formula 2]

$$CH_2=CHNCOR^1 \quad (1)$$

In formula (1), $R^1$ represents a divalent organic group.

$R^1$ in the above formula (1) is a divalent organic group, preferably a divalent saturated hydrocarbon group or unsaturated hydrocarbon group, more preferably a divalent saturated hydrocarbon group (e.g., an alkylene group having 3 to 5 carbon atoms).

The N-vinyl cyclic amide represented by the above formula (1) is preferably N-vinyl-2-pyrrolidone (NVP), N-vinyl-2-piperidone, N-vinyl-2-caprolactam, N-vinyl-3-morpholinone, N-vinyl-1,3-oxazin-2-one, N-vinyl-3,5-morpholine dione, or the like, more preferably N-vinyl-2-pyrrolidone or N-vinyl-2-caprolactam, further preferably N-vinyl-2-pyrrolidone, from the viewpoint of further improving foaming and peeling resistance.

[1-4. Other copolymerizable monomers]

Examples of the copolymerizable monomer in the acrylic polymer include, in addition to the nitrogen atom-containing monomers and hydroxyl group-containing monomers described above, alicyclic structure-containing monomers, epoxy group-containing monomers, alkoxyalkyl (meth)acrylate esters, epoxy group-containing monomers, sulfonic acid group-containing monomers, phosphoric acid group-containing monomers, (meth)acrylic esters having an aromatic hydrocarbon group, vinyl esters, aromatic vinyl compound olefins or dienes, vinyl ethers, and vinyl chlorides.

[1-5. Hydrogenated polyolefinic resin]

The acrylic pressure-sensitive adhesive composition of the present invention is preferably an acrylic pressure-sensitive adhesive composition in which an acrylic polymer is the main component and a hydrogenated polyolefinic resin is formulated. The hydrogenated polyolefinic resin is a material having a low dielectric constant, and by formulating the hydrogenated polyolefinic resin to the acrylic polymer of the present invention, the dielectric constant can be lowered to thereby prevent a malfunction of touch operation in a touch panel in which an optical member (touch sensor film) having metal wiring such as a metal mesh film or silver nanowire film is laminated. This configuration is also preferable in that a highly-flexible pressure-sensitive adhesive layer can be achieved without requiring lowering the molecular weight of the acrylic polymer and, even when an optical member (touch sensor film) having metal wiring such as a metal mesh film or silver nanowire film is laminated, the stress to the metal wiring is sufficiently relaxed to enable display irregularities to be prevented. The hydrogenated polyolefinic resin is also excellent in the compatibility to the acrylic polymer and thus preferable in that the transparency of the pressure-sensitive adhesive layer of the present invention can be maintained at a higher level. The hydrogenated polyolefinic resins may be used singly or in combination of two or more.

The hydrogenated polyolefinic resin is preferably one that exhibits liquid flowability at 25°C in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented. The phrase "the hydrogenated polyolefinic resin exhibits liquid flowability at 25°C" means that the viscosity measured at 25°C with a B-type viscometer is 10,000 mPa·s or less.

The hydrogenated polyolefinic resin, of which carbon-carbon double bonds in the molecular have been reduced, is unlikely to cause inhibition of polymerization in curing the acrylic pressure-sensitive adhesive composition of the present invention with ultraviolet irradiation, for example, to thereby be unlikely to cause decrease in polymerization ratio and lowering of the molecular weight, thus enabling the adhesion reliability of the acrylic pressure-sensitive adhesive composition of the present invention at high temperatures to be maintained at a high level.

The hydrogenation ratio of the hydrogenated polyolefinic resin is preferably 90% or more, more preferably 95% or more, further preferably 97% or more, from the viewpoint of making inhibition of polymerization unlikely to occur and of the adhesion reliability at high temperatures. The upper limit value of the hydrogenation ratio is, but not particularly limited to, theoretically 100% and may be practically 99.9% or less or may be 99.8% or less. The hydrogenation ratio of the hydrogenated polyolefinic resin can be determined by quantifying the amount of double bonds remaining in the hydrogenated polyolefinic resin by $^1$H-NMR measurement or the like.

The iodine value (I g/100 g) of the hydrogenated polyolefinic resin is preferably 30 or less, more preferably 25 or less, further preferably 20 or less, from the viewpoint of making inhibition of polymerization unlikely to occur and of the adhesion reliability at high temperatures. The lower limit value of the iodine value, but not particularly limited to, may be 0.1 or more or may be 0.2 or more. The iodine value is a value as measured in accordance with JIS K 0070-1992.

The number average molecular weight (Mn) of the hydrogenated polyolefinic resin is preferably from 1000 to 5000 in respect of imparting moderate stress relaxation properties and flowability to the pressure-sensitive adhesive layer and improving the compatibility to the acrylic polymer. The number average molecular weight (Mn) is preferably 1000 or more, more preferably 1500 or more, further preferably 1800 or more, in respect that moderate stress relaxation properties and flowability can be imparted to the pressure-sensitive adhesive composition. The number average molecular weight (Mn) is preferably 5000 or less, more preferably 4800 or less, further preferably 4600 or less, in respect of improving the compatibility to the acrylic polymer and enabling the transparency of the acrylic pressure-sensitive adhesive composition of the present invention to be maintained at a higher level.

The polydispersity (Mw/Mn) of the hydrogenated polyolefinic resin is preferably 2.0 or less, 1.8 or less, in respect of imparting moderate stress relaxation properties and flowability to the pressure-sensitive adhesive layer, improving the compatibility to the acrylic polymer, maintaining high-level transparency, and enabling haze to be suppressed. The lower limit value of the polydispersity, but not particularly limited to, may be practically 1.0 or may be 1.1 or more.

The number average molecular weight (Mn) and polydispersity (Mw/Mn) of the hydrogenated polyolefinic resin are values determined by measurement by gel permeation chromatography (GPC) in terms of polystyrene standard.

The hydrogenated polyolefinic resin contains a hydrogenated polyolefin. The pressure-sensitive adhesive composition of the present invention is suitable from the viewpoint that the dielectric constant can be lowered and a malfunction of touch operation in a touch panel can be suppressed by containing a hydrogenated polyolefin as the hydrogenated polyolefinic resin.

The hydrogenated polyolefin described above is a hydrogenated product of a polymer having a constituent unit derived from an olefin (polyolefin). Examples of the hydrogenated polyolefin include hydrogenated products of homopolymers and copolymers of $\alpha$-olefins such as ethylene, propylene, 1-butene, isobutene, and 1-hexene; diene compounds such as butadiene and isoprene; and aromatic vinyl compounds such as styrene. As the hydrogenated polyolefin, a hydrogenated product of a homopolymer or copolymer of a diene compound is preferable, and examples thereof include hydrogenated polybutadiene and hydrogenated polyisoprene. The hydrogenated polyolefins may be used singly or in combination of two or more.

The hydrogenated polyolefinic resin preferably further contains a hydrogenated polyolefin polyol in addition to

the hydrogenated polyolefin, from the viewpoint of lowering the dielectric constant and suppressing a malfunction of touch operation in a touch panel.

The hydrogenated polyolefin polyol described above is a compound in which an end of the hydrogenated polyolefin is modified with a hydroxyl group. As the hydrogenated polyolefin polyol, a hydroxyl group-modified product of a hydrogenated product of a homopolymer or copolymer of a diene compound is preferable, and examples thereof include hydrogenated polybutadiene polyol and hydrogenated polyisoprene polyol. The hydrogenated polyolefin polyols may be used singly or in combination of two or more.

The hydrogenated polyolefin and hydrogenated polyolefin polyol described above are preferably hydrogenated polybutadiene and hydrogenated polybutadiene polyol, respectively, in respect that a highly-flexible pressure-sensitive adhesive layer can be achieved and, even when an optical member (touch sensor film) having metal wiring such as a metal mesh film or silver nanowire film is laminated, the stress to the metal wiring is sufficiently relaxed to enable display irregularities to be prevented.

As the hydrogenated polybutadiene, one represented by the following formula (2) is preferable, and as the hydrogenated polybutadiene polyol, one represented by the following formula (3) is preferable.

[Formula 3]

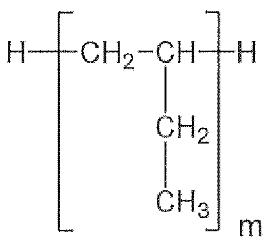

(2)

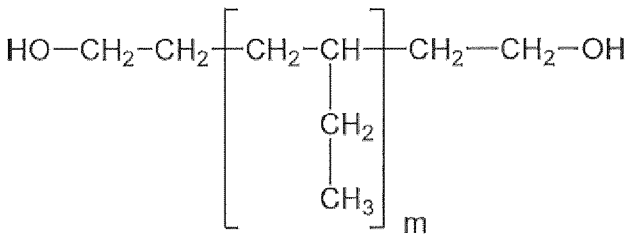

(3)

In the above formulas, m represents the degree of polymerization of the hydrogenated polybutadiene.

As the hydrogenated polyolefin and hydrogenated polyolefin polyol, commercially available products can be used. Examples of commercially available products of the hydrogenated polyolefin include trade names "BI-2000" and "BI-3000" (both manufactured by Nippon Soda Co., Ltd.). Examples of commercially available products of the hydrogenated polyolefin polyol include trade names "GI-1000", "GI-2000", and "GI-3000" (all manufactured by Nippon Soda Co., Ltd.) and trade name "EPOL" (manufactured by Idemitsu Kosan Co., Ltd.).

The content of the hydrogenated polyolefinic resin in the acrylic pressure-sensitive adhesive composition described above is, but not particularly limited to, preferably 5 part by weight or more, more preferably 10 parts by weight or more, further preferably 15 parts by weight or more based on 100 parts by weight of the acrylic polymer, in the viewpoint of lowering the dielectric constant and suppressing a malfunction of touch operation in a touch panel. Meanwhile, the content of the hydrogenated polyolefinic resin is preferably 40 parts by weight or less, more preferably 35 parts by weight or less, further preferably 30 parts by weight or less, from the viewpoint of suppressing increase in the haze and achieving higher transparency and from the viewpoint of enabling adhesive strength and adhesion reliability at high temperatures to be maintained at a high level.

The content of the hydrogenated polyolefin in the acrylic pressure-sensitive adhesive composition described above is, but not particularly limited to, preferably 0.5 parts by weight or more, more preferably 1 part by weight or more, further preferably 1.5 parts by weight or more based on 100 parts by weight of the acrylic polymer, in the viewpoint of lowering the dielectric constant and suppressing a malfunction of touch operation in a touch panel. Meanwhile, the content of the hydrogenated polyolefin is preferably 20 parts by weight or less, more preferably 15 parts by weight or less, further preferably 12 parts by weight or less from the viewpoint of suppressing increase in the haze and achieving higher transparency and from the viewpoint of enabling adhesive strength and adhesion reliability at high temperatures to be maintained at a high level.

The content of the hydrogenated polyolefin polyol in the acrylic pressure-sensitive adhesive composition described above is, but not particularly limited to, preferably 1 parts by weight or more, more preferably 3 part by weight or more, further preferably 5 parts by weight or more, and may be 10 parts by weight or more based on 100 parts by weight of the acrylic polymer, in the viewpoint of lowering the dielectric constant and suppressing a malfunction of touch

operation in a touch panel. Meanwhile, the content of the hydrogenated polyolefin polyol is preferably 40 parts by weight or less, more preferably 35 parts by weight or less, further preferably 30 parts by weight or less, particularly preferably 25 parts by weight or less from the viewpoint of suppressing increase in the haze and achieving higher transparency and from the viewpoint of enabling adhesive strength and adhesion reliability at high temperatures to be maintained at a high level.

The weight ratio of the content of the hydrogenated polyolefin to the content of the hydrogenated polyolefin polyol (hydrogenated polyolefin/hydrogenated polyolefin polyol) in the acrylic pressure-sensitive adhesive composition described above is, but not particularly limited to, preferably 1/99 or more, more preferably 2/98 or more and may be 3/97 or more, or 4/96 or more, in the viewpoint of lowering the dielectric constant and suppressing a malfunction of touch operation in a touch panel. The ratio described above is preferably 90/10 or less, more preferably 80/20 or less, further preferably 70/30 or less and may be 55/45 or less, 45/55 or less, or 30/70 or less, in the viewpoint of suppressing increase in the haze and achieving higher transparency.

[1-6. Polyfunctional (meth)acrylate]

The acrylic pressure-sensitive adhesive composition of the present invention preferably further contains a polyfunctional (meth)acrylate. The polyfunctional (meth)acrylate serves as a crosslinking component, making it easier for the pressure-sensitive adhesive composition to have moderate cohesion.

Examples of the polyfunctional (meth)acrylate include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. The polyfunctional (meth)acrylates may be used singly or in combination of two or more.

The content (proportion) of the polyfunctional (meth)acrylate is, but not particularly limited to, preferably 0.001 parts by weight or more, more preferably 0.002 parts by weight or more, further preferably 0.005 parts by weight or more, and may be 0.01 parts by weight or more based on 100 parts by weight of the acrylic polymer, in the viewpoint that a pressure-sensitive adhesive layer has moderate cohesion. The content (proportion) of the polyfunctional (meth)acrylate is preferably 0.5 parts by weight or less, more preferably 0.4 parts by weight or less, further preferably 0.3 parts by weight or less based on 100 parts by weight of the acrylic polymer, in respect that a highly-flexible pressure-sensitive adhesive layer can be achieved and in that the stress to the metal wiring is sufficiently relaxed to enable display irregularities to be prevented.

[1-7. Silane coupling agent]

The acrylic pressure-sensitive adhesive composition of the present invention preferably further contains a silane coupling agent. A case in which a silane coupling agent is contained in the pressure-sensitive adhesive composition is preferable in that excellent adhesiveness to glass (particularly, excellent adhesion reliability to glass at high temperatures and high humidity) is more easily obtained.

Examples of the silane coupling agent described above include, but not particularly limited to, γ-glycidoxypropyltrimethoxysilane, γ-glycidoxypropyltriethoxysilane, γ-aminopropyltrimethoxysilane, and N-phenyl-aminopropyltrimethoxysilane. Of these, γ-glycidoxypropyltrimethoxysilane is preferable. Further examples of the silane coupling agent include commercially available products such as trade name "KBM-403" (manufactured by Shin-Etsu Chemical Co., Ltd.). The silane coupling agents may be used singly or in combination of two or more.

The content of the silane coupling agent described above is, but not particularly limited to, preferably from 0.01 to 1 part by weight, more preferably from 0.02 to 0.5 parts by weight based on 100 parts by weight of the acrylic polymer, in respect of improving the adhesion reliability to glass.

[1-8. Crosslinking agent]

The acrylic pressure-sensitive adhesive composition of the present invention is preferably not a solvent type, as described above, that is, is free of or substantially free of a crosslinking agent.

Examples of the crosslinking agent described above include isocyanate crosslinking agents, epoxy crosslinking agents, melamine crosslinking agents, and peroxide crosslinking agents and additionally include urea crosslinking agents, metal alkoxide crosslinking agents, metal chelate crosslinking agents, metal salt crosslinking agents, carbodiimide crosslinking agents, oxazoline crosslinking agents, aziridine crosslinking agents, and amine crosslinking agents. Particularly, the acrylic pressure-sensitive adhesive composition of the present invention is preferably free of or substantially free of an isocyanate crosslinking agent and/or epoxy crosslinking agent and is preferably free of or substantially free

of an isocyanate crosslinking agent, as the crosslinking agent.

In the acrylic pressure-sensitive adhesive composition of the present invention, the phrase "substantially free of" a crosslinking agent refers to actively formulating no crosslinking agent except when a crosslinking agent is inevitably mixed. Specifically, it can be said that one in which the content of the crosslinking agent in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free of a crosslinking agent. One in which the content thereof is preferably 0.05 parts by weight or less (e.g., from 0 to 0.05 parts by weight), more preferably 0.01 parts by weight or less (e.g., from 0 to 0.01 parts by weight), further preferably 0.001 parts by weight or less (e.g., from 0 to 0.001 parts by weight) based on the total amount of the monomer components constituting the acrylic polymer (100 parts by weight) also can be said to be substantially free of a crosslinking agent.

[1-9. Additives]

In the acrylic pressure-sensitive adhesive composition of the present invention, known additives such as a crosslinking accelerator, a tackifier resin (a rosin derivative, a polyterpene resin, oil-soluble phenol, or the like), an antiaging agent, a filler, a colorant (dye, pigment, or the like), a UV absorbing agent, a chain transfer agent, a plasticizer, a softener, a surfactant, an antistatic agent, an anti-corrosive agent, and an antioxidant may be contained as required as long as characteristics of the present invention are not impaired. From the viewpoint of suppressing increase in the haze of the pressure-sensitive adhesive layer of the present invention, the acrylic pressure-sensitive adhesive composition of the present invention is preferably substantially free of an anti-corrosive agent and an antioxidant. Such additives may be used singly or in combination of two or more.

From the viewpoint of suppressing increase in the haze of the pressure-sensitive adhesive layer of the present invention, the acrylic pressure-sensitive adhesive composition of the present invention is preferably substantially free of an antioxidant. The phrase "substantially free of" an antioxidant refers to actively formulating no antioxidant except when an antioxidant is inevitably mixed. Specifically, it can be said that one in which the content of the antioxidant in the pressure-sensitive adhesive composition is 1.0% by weight or less (preferably 0.5% by weight or less, further preferably 0.2% by weight or less) based on the total amount of the pressure-sensitive adhesive composition (total weight, 100% by weight) is substantially free of an antioxidant. One in which the content thereof is, for example, 0.5 parts by weight or less (e.g., from 0 to 0.5 parts by weight), preferably 0.05 parts by weight or less (e.g., from 0 to 0.05 parts by weight), more preferably 0.01 parts by weight or less (e.g., from 0 to 0.01 parts by weight), further preferably 0.001 parts by weight or less (e.g., from 0 to 0.001 parts by weight) based on the total amount of the monomer components constituting the acrylic polymer (100 parts by weight) also can be said to be substantially free of an antioxidant.

[1-10. Preparation of acrylic pressure-sensitive adhesive composition]

The acrylic pressure-sensitive adhesive composition of the present invention can be prepared by mixing and homogeneously stirring an acrylic polymer, and as required, a hydrogenated polyolefinic resin, a polyfunctional (meth)acrylate, a silane coupling agent, and other additives. In this case, from the viewpoint of adjusting the elastic modulus of the pressure-sensitive adhesive layer, a monomer component constituting an acrylic polymer may be formulated. When the monomer component constituting an acrylic polymer is used for adjusting the elastic modulus, in order to maintain the above-described properties of the pressure-sensitive adhesive layer, the acrylic polymer is preferably prepared with a monomer mixture from which the monomer component used has been removed. The monomer components used for adjusting the elastic modulus are not particularly limited, but for example, the functional group-containing monomer described above is preferred, and the hydroxyl group-containing monomer is more preferred.

The amount of the monomer components used for adjusting the elastic modulus to be used is, but not particularly limited to, preferably from 5 to 30 parts by weight, more preferably from 10 to 20 parts by weight based on 100 parts by weight of the total monomer units of the acrylic polymer (the total amount of the monomer components constituting the acrylic polymer) from the viewpoint of moderately adjusting the elastic modulus of the pressure-sensitive adhesive layer.

[2. Pressure-sensitive adhesive sheet]

The pressure-sensitive adhesive sheet of the present invention is only required to have the pressure-sensitive adhesive layer of the present invention (in particular, the pressure-sensitive adhesive layer formed of the acrylic pressure-sensitive adhesive composition of the present invention), and other respects are not particularly limited.

The pressure-sensitive adhesive sheet of the present invention may be a double-coated pressure-sensitive adhesive sheet of which both the surfaces is formed as a pressure-sensitive adhesive layer surface or may be a single-coated pressure-sensitive adhesive sheet of which only one surface is formed as a pressure-sensitive adhesive layer surface. Of these, from the viewpoint of laminating two members, the pressure-sensitive adhesive sheet is preferably a

double-coated pressure-sensitive adhesive sheet. When the "pressure-sensitive adhesive sheet" is referred to herein, a tape-like sheet, that is, "pressure-sensitive adhesive tape" is also included. A surface of the pressure-sensitive adhesive layer herein may be called an "adhesive face".

The pressure-sensitive adhesive sheet of the present invention may be provided with a release liner on the adhesive face until used.

The pressure-sensitive adhesive sheet of the present invention may be a so-called "substrateless type pressure-sensitive adhesive sheet that has no substrate (substrate layer) (hereinafter, may be referred to as a "substrateless pressure-sensitive adhesive sheet") or may be a pressure-sensitive adhesive sheet having a substrate (hereinafter, may be referred to as a "pressure-sensitive adhesive sheet with a substrate"). Examples of the substrateless pressure-sensitive adhesive sheet described above include a double-coated pressure-sensitive adhesive sheet consisting only of the pressure-sensitive adhesive layer described above and a double-coated pressure-sensitive adhesive sheet comprising the pressure-sensitive adhesive layer and a pressure-sensitive adhesive layer other than the pressure-sensitive adhesive layer (may be referred to as "another pressure-sensitive adhesive layer"). Meanwhile, examples of the pressure-sensitive adhesive sheet having a substrate include a pressure-sensitive adhesive sheet having the pressure-sensitive adhesive layer on at least one face of the substrate. Of these, the substrateless pressure-sensitive adhesive sheet (substrateless double-coated pressure-sensitive adhesive sheet) is preferable, and the substrateless double-coated pressure-sensitive adhesive sheet consisting only of pressure-sensitive adhesive layer is more preferable. The "substrate (substrate layer)" does not include a release liner to be separated when the pressure-sensitive adhesive sheet is used (laminated).

Figure 1 is a schematic view (cross-sectional view) illustrating a specific example of a preferable form of the pressure-sensitive adhesive sheet of the present invention, and 1 shows a pressure-sensitive adhesive sheet, 10 shows the pressure-sensitive adhesive layer of the present invention, 11, 12 show a release liner. In Figure 1, the pressure-sensitive adhesive sheet 1 is a substrateless double-coated pressure-sensitive adhesive sheet, and the adhesive faces of both faces of the pressure-sensitive adhesive layer 10 are protected with release liners 11, 12.

Since the pressure-sensitive adhesive layer 10 is composed of the pressure-sensitive adhesive layer of the present invention, the pressure-sensitive adhesive sheet 1 has high reliability in which the adhesive strength does not change easily in response to environmental changes, has small changes in adhesive strength due to the storage environment from immediately after filming, and has excellent productivity.

The thickness (total thickness) of the pressure-sensitive adhesive sheet of the present invention is, but not particularly limited to, preferably from 12 to 350 $\mu$m, more preferably from 12 to 300 um. A case in which the thickness is equal to or larger than a certain thickness is preferable because, in a touch panel in which an optical member (touch sensor film) having metal wiring such as a metal mesh film or silver nanowire film is laminated, the stress to the metal wiring is sufficiently relaxed to enable display irregularities to be prevented. A case in which the thickness is equal to or smaller than a certain thickness is preferable in that an excellent appearance is more easily retained during production and storage as a roll and adhesive stains are unlikely to occur during cutting processing. The thickness of the release liner is intended not to be included in the thickness of the pressure-sensitive adhesive sheet of the present invention.

The pressure-sensitive adhesive sheet of the present invention is preferably produced in accordance with a known or customary production method, but not particularly limited thereto. For example, the pressure-sensitive adhesive sheet of the present invention, when being a substrateless pressure-sensitive adhesive sheet, can be obtained by forming the pressure-sensitive adhesive layer described above by the method described above on a release liner. Alternatively, the pressure-sensitive adhesive sheet of the present invention, when being a pressure-sensitive adhesive sheet with a substrate, may be obtained by forming the pressure-sensitive adhesive layer directly on the face of the substrate (direct application method), or may be obtained by once forming the pressure-sensitive adhesive layer on a release liner and providing the pressure-sensitive adhesive layer on the substrate by transferring (laminating) the pressure-sensitive adhesive layer onto the substrate (transfer method).

The pressure-sensitive adhesive sheet of the present invention may have other layers in addition to the pressure-sensitive adhesive layer described above. Examples of the other layers include a different pressure-sensitive adhesive layer (pressure-sensitive adhesive layer other than the pressure-sensitive adhesive layer of the present invention), an intermediate layer, and an undercoat layer. The pressure-sensitive adhesive sheet of the present invention may have 2 or more other layers.

Examples of the substrate in a case in which the pressure-sensitive adhesive sheet of the present invention is a pressure-sensitive adhesive sheet with a substrate include, but not particularly limited to, plastic films and various optical films such as an antireflection (AR) film, a polarizing plate, and a retardation plate. Examples of materials for the plastic films and the like include plastic materials, such as polyester resins such as polyethylene terephthalate (PET), acrylic resins such as polymethyl methacrylate (PMMA), polycarbonate, triacetyl cellulose (TAC), polysulfone, polyarylate, polyimide, polyvinyl chloride, polyethylene, polypropylene, ethylene-propylene copolymers, and cyclic olefinic polymers such as trade name "ARTON (cyclic olefinic polymer, manufactured by JSR Corporation)" and trade name "ZEONOR (cyclic olefinic polymer, manufactured by Zeon Corporation)". These plastic materials may be used singly or

in combination of two or more. The "substrate" described above is a portion to be laminated to an object together with the pressure-sensitive adhesive layer when the pressure-sensitive adhesive sheet is laminated to the object. The release liner to be separated in use (lamination) of the pressure-sensitive adhesive sheet is not included in the "substrate".

The substrate described above is preferably transparent. The total light transmittance in the visible light wavelength region of the substrate (in accordance with JIS K 7361-1) is, but not particularly limited to, preferably 85% or more, more preferably 88% or more. The haze of the substrate (in accordance with JIS K7136) is, but not particularly limited to, preferably 1.0% or less, more preferably 0.8% or less. Examples of such a transparent substrate include PET films, and non-oriented films such as trade name "ARTON" and trade name "ZEONOA".

The thickness of the substrate is, but not particularly limited to, preferably from 12 to 500 um. The substrate may have either of a single layer form and a multilayer form. The surface of the substrate may be appropriately subjected to a known and customary surface treatment, for example, a physical treatment such as a corona discharge treatment or a plasma treatment or a chemical treatment such as a base coat treatment.

The pressure-sensitive adhesive sheet of the present invention may be provided with a release liner on the adhesive face until used. When the pressure-sensitive adhesive sheet of the present invention is a double-coated pressure-sensitive adhesive sheet, each adhesive face may be protected by a release liner or may be protected in a roll form wound with one release liner having a release face on each side. The release liner is used as a protective material of the pressure-sensitive adhesive layer and peeled off in lamination of the sheet onto the object. When the pressure-sensitive adhesive sheet of the present invention is a substrateless pressure-sensitive adhesive sheet, the release liner also serves as a support for the pressure-sensitive adhesive layer. The release liner may not necessarily be provided.

The pressure-sensitive adhesive sheet of the present invention comprises the pressure-sensitive adhesive layer of the present invention (in particular, the pressure-sensitive adhesive layer formed of the acrylic pressure-sensitive adhesive composition of the present invention), and thus the pressure-sensitive adhesive sheet of the present invention has high reliability in which the adhesive strength does not change easily in response to environmental changes, has small changes in adhesive strength due to the storage environment from immediately after filming, and has excellent productivity. The pressure-sensitive adhesive sheet of the present invention is also excellent in flexibility and can prevent display irregularities of a display device and an input device even when an optical member (touch sensor film) having metal wiring such as a metal mesh film or silver nanowire film is laminated. The pressure-sensitive adhesive sheet of the present invention is further excellent in adhesiveness, foaming and peeling resistance, and level difference conformability.

Thus, the pressure-sensitive adhesive sheet of the present invention is useful for laminating an optical member such as a polarizing film, a retardation film, an optical compensation film, a touch sensor film, or a cover film on an image display panel or for laminating these optical members to each other in an image display device or a touch panel incorporating a touch sensor in the image display device. The pressure-sensitive adhesive sheet of the present invention is usefully used also for an object that easily generates foaming at the interface at high temperatures. For example, polymethyl methacrylate resin (PMMA) may contain an unreacted monomer and thus easily generates foaming due to foreign matter at high temperatures. Polycarbonate (PC) easily generates outgassing of water and carbon dioxide at high temperatures. The pressure-sensitive adhesive sheet of the present invention is excellent in foaming and peeling resistance and thus usefully used also for a plastic object containing such resins.

The pressure-sensitive adhesive sheet of the present invention is usefully used also for an object having a large linear expansion coefficient, in addition to an object having a small linear expansion coefficient. Examples of the above-described object having a small linear expansion coefficient include, but not particularly limited to, glass plates (linear expansion coefficient: $0.3 \times 10^{-5}$ to $0.8 \times 10^{-5}$/°C) and polyethylene terephthalate substrates (PET films, linear expansion coefficient: $1.5 \times 10^{-5}$ to $2 \times 10^{-5}$/°C). Examples of the above-described object having a large linear expansion coefficient include, but not particularly limited to, resin substrates having a large linear expansion coefficient, and more specific examples thereof include polycarbonate resin substrates (PC, linear expansion coefficient: $7 \times 10^{-5}$ to $8 \times 10^{-5}$/°C), polymethyl methacrylate resin substrates (PMMA, linear expansion coefficient: $7 \times 10^{-5}$ to $8 \times 10^{-5}$/°C), and cycloolefin polymer substrates (COP, linear expansion coefficient: $6 \times 10^{-5}$ to $7 \times 10^{-5}$/°C), trade name "ZEONOR" (manufactured by Zeon Corporation) and trade name "ARTON " (manufactured by JSR Corporation).

The pressure-sensitive adhesive sheet of the present invention is usefully used for lamination of an object having a small linear expansion coefficient and an object having a large linear expansion coefficient. Specifically, the pressure-sensitive adhesive sheet of the present invention is preferably used for lamination of a glass object (e.g., a glass plate, chemically reinforced glass, a glass lens, or the like) and the above-described resin substrate having a large linear expansion coefficient.

As described above, the pressure-sensitive adhesive sheet of the present invention is useful for lamination of objects of various materials, and particularly usefully used for lamination of a glass object and a plastic object.

Further, the pressure-sensitive adhesive sheet of the present invention is usefully used also for objects having a level difference on the surface thereof such as optical members (touch sensor films) having metal wiring, such as

metal mesh films and silver nanowire films, in addition to objects having a smooth surface. Particularly, the pressure-sensitive adhesive sheet of the present invention is usefully used for lamination of a glass object and the above-described resin substrate having a large linear expansion coefficient, even when at least one of the glass object and the resin substrate having a large linear expansion coefficient has a level difference on the surface thereof.

The pressure-sensitive adhesive sheet of the present invention is preferably used in applications for production of mobile electronic devices. Examples of the mobile electronic devices described above include mobile phones, PHS's, smartphones, tablets (tablet-type computers), mobile computers (mobile PC's), personal digital assistants (PDA's), electronic organizers, portable broadcast receiving devices such as portable televisions and portable radios, portable game machines, portable audio players, portable DVD players, cameras such as digital cameras, and camcorder-type video cameras.

The pressure-sensitive adhesive sheet of the present invention is preferably used for, for example, lamination of members or modules composing a mobile electronic device, fixing of a member or a module composing a mobile electronic device to a housing, and the like. More specific examples include lamination of cover glass or a lens (particularly a glass lens) and a touch panel or a touch sensor film (particularly, a touch sensor film having metal wiring such as a metal mesh film or a silver nanowire film), lamination of a polarizing film and a touch panel or a touch sensor film, lamination of a display panel and a touch panel or a touch sensor, fixing of cover glass or a lens (particularly a glass lens) to a housing, fixing of a display panel to a housing, fixing of an input device such as a sheet keyboard, a touch panel, or the like to a housing, lamination of the protection panel of an information display unit and a housing, lamination of housings, lamination of a housing and a decorative sheet, and fixing and lamination of various members or modules composing a mobile electronic device. Herein, a display panel refers to a structure composed of at least a lens (particularly a glass lens) and a touch panel. A lens herein is a concept including both of a transparent body that exhibits an action of light refraction and a transparent body that has no action of light refraction. That is, the lens herein also includes a mere window panel having no refractive action.

Further, the pressure-sensitive adhesive sheet of the present invention is preferably used for optical applications. That is, the pressure-sensitive adhesive sheet of the present invention is preferably an optical pressure-sensitive adhesive sheet for use in optical applications. More specifically, the pressure-sensitive adhesive sheet of the present invention is preferably used for, for example, applications of laminating optical members (for lamination of optical members), production applications of products in which the optical member is used (optical products), and the like.

[3. Optical member with pressure-sensitive adhesive layer, image display device, touch panel]

The optical member with a pressure-sensitive adhesive layer of the present invention is only required that the pressure-sensitive adhesive sheet of the present invention is laminated on at least one face of an optical member, and other respects are not particularly limited. The pressure-sensitive adhesive layer of the optical member with a pressure-sensitive adhesive layer of the present invention may be provided with a release liner on the adhesive face until used, but the release liner may not be provided. Since the optical member with a pressure-sensitive adhesive layer of the present invention is formed by laminating the pressure-sensitive adhesive sheet of the present invention, it has high reliability in which the adhesive strength does not change easily in response to environmental changes, has small changes in adhesive strength due to the storage environment from immediately after filming, and has excellent productivity. The optical member with a pressure-sensitive adhesive layer of the present invention also has high flexibility, sufficiently relaxes the stress to metal wiring to enable display irregularities to be prevented, and is also excellent in adhesion reliability, particularly adhesion reliability at high temperatures.

The optical member with a pressure-sensitive adhesive layer of the present invention may be one in which the pressure-sensitive adhesive sheet of the present invention is laminated on an optical member (touch sensor film) having metal wiring such as a metal mesh film or silver nanowire film. In that case, it is preferable that the pressure-sensitive adhesive sheet of the present invention is laminated onto the face of the side having the metal wiring of the touch sensor film.

Figure 2 is a schematic view (cross-sectional view) illustrating a specific example of a preferable form of the optical member with a pressure-sensitive adhesive layer of the present invention. In Figure 2(a), 2A shows an optical member with a pressure-sensitive adhesive layer, 20 shows the pressure-sensitive adhesive layer of the present invention, 21 shows an optical member, and 22 shows a release liner, and the pressure-sensitive adhesive layer 20 is laminated on one face of the optical member 21, and the adhesive face that is opposite side to the optical member 21 of the pressure-sensitive adhesive layer 20 is protected by the release liner 22. In Figure 2(b), 2B shows an optical member with a pressure-sensitive adhesive layer (touch sensor film with a pressure-sensitive adhesive layer), 20 shows the pressure-sensitive adhesive layer of the present invention, 23 shows a touch sensor film, 22 shows a release liner, and 24 shows metal wiring, and the pressure-sensitive adhesive layer 20 is laminated on one face having the metal wiring 24 of the touch sensor film 23, and the adhesive face that is opposite side to the touch sensor film 23 of the pressure-sensitive adhesive layer 20 is protected by the release liner 22. Since the pressure-sensitive adhesive layer 20 is

composed of the pressure-sensitive adhesive layer of the present invention, the optical member with a pressure-sensitive adhesive layer 2A and the touch sensor film with a pressure-sensitive adhesive layer 2B have high reliability in which the adhesive strength does not change easily in response to environmental changes, have small changes in adhesive strength due to the storage environment from immediately after filming, and have excellent productivity.

From the viewpoint of obtaining a further excellent corrosion prevention effect, the optical member with a pressure-sensitive adhesive layer more preferably has a further pressure-sensitive adhesive layer laminated on the face of the optical member on the side opposite to the side having the pressure-sensitive adhesive layer. The pressure-sensitive adhesive layer is preferably the pressure-sensitive adhesive layer of the present invention.

An optical member refers to a member having optical properties (e.g., polarizability, photorefractivity, light scattering, light reflectivity, optical transparency, optical absorptivity, optical diffractive ability, optical rotatory, and visibility). Examples of a substrate composing the optical member include, but not particularly limited to, substrates composing devices (optical devices) such as image display devices and touch panels or substrates for use in these devices. Examples thereof include polarizing films, wavelength plates, retardation films, optical compensation films, brightness enhancing films, light-guiding panels, reflective films, antireflective films, hard-coated films (films obtained by subjecting at least one face of plastic films such as PET films to hard coat treatment), transparent conductive films (e.g., plastic films having an ITO layer on the surface thereof (preferably, ITO films such as PET-ITO, polycarbonate, and cycloolefin polymer)), design films, decorative films, surface-protective plates, prisms, lenses, color filters, transparent substrates (glass substrates such as glass sensors, glass display panels (such as LCD's), and glass plates having a transparent electrode), and further, substrates in which these are laminated (these may be collectively referred to as "functional films"). These films may also have metal wiring such as a metal nanowire layer, an electrically-conductive polymer layer, or the like. On these films, metallic thin wires may be mesh-printed. The "plates" and "films" described above are each intended to include one in the form of plate, film, sheet, or the like. For example, "polarizing films" are intended to include "polarizing plates", "polarizing sheets", and the like. The "films" are intended to include film sensors and the like.

Particularly, the pressure-sensitive adhesive sheet of the present invention can be suitably used in transparent conductive films (metal mesh films, silver nanowire films) in which the metal wiring described above is metal mesh wiring or silver nanowire, particularly, in optical members (touch sensor films) having a metal mesh film. When optical members having metal wiring such as metal mesh films and silver nanowire films are laminated with a pressure-sensitive adhesive sheet intervened therebetween, there is a problem in that display irregularities are likely to occur in the periphery of an image display panel due to stress strain applied to the pressure-sensitive adhesive around the metal wiring or the like. Accordingly, the pressure-sensitive adhesive layer of a pressure-sensitive adhesive sheet for use in laminating optical members having metal wiring is required to have flexibility to relax the stress to the metal wiring in order to prevent such display irregularities.

In the pressure-sensitive adhesive sheet of the present invention, the pressure-sensitive adhesive layer of the present invention has high flexibility and can sufficiently relax the stress to the metal wiring to enable display irregularities to be prevented even when a film having metal wiring such as a metal mesh film or silver nanowire film is laminated. The image display device and the touch panel having the pressure-sensitive adhesive sheet of the present invention have excellent durability because the optical member is laminated with the pressure-sensitive adhesive layer having high reliability in which the adhesive strength does not change easily in response to environmental changes.

Examples of the image display device include liquid crystal display devices, organic EL (electroluminescent) display devices, PDPs (plasma display panels), and electronic paper.

Examples of substrates composing the optical members include, but not particularly limited to, substrates comprising glass, acryl resin, polycarbonate, polyethylene terephthalate, a cycloolefin polymer, a metal thin film (e.g., substrates in a sheet, film, or plate form), or the like. The "optical members" in the present invention are intended to also include members that serve to decorate or protect an image display device and a touch panel while keeping the visibility thereof (design films, decorative films, surface-protective films, and the like), as described above.

When the pressure-sensitive adhesive sheet of the present invention is a pressure-sensitive adhesive sheet having a substrate, and the pressure-sensitive adhesive sheet composes a member having optical properties, the substrate can be regarded as the same as the substrate, and the pressure-sensitive adhesive sheet can be said to be also a pressure-sensitive adhesive layer optical member of the present invention.

When the pressure-sensitive adhesive sheet of the present invention is a pressure-sensitive adhesive sheet having a substrate, and the functional film is used as the substrate, the pressure-sensitive adhesive sheet of the present invention also can be used as a "pressure-sensitive adhesive functional film" that has the pressure-sensitive adhesive layer on at least one face of the functional film.

Figure 3 is a schematic view (cross-sectional view) illustrating a specific example of a preferable form of the image display device of the present invention.

In Figure 3, 3 shows an image display device, 30, 31, 32 show a pressure-sensitive adhesive layer, 33 shows an image display panel, 34, 35 shows a polarizing film, and 36 shows a transparent substrate, and the image display device 3 is laminated with the polarizing film 35, the pressure-sensitive adhesive layer 32, the image display panel 33,

the pressure-sensitive adhesive layer 31, the polarizing film 34, the pressure-sensitive adhesive layer 30, and the transparent substrate 36 in this order.

At least one of the pressure-sensitive adhesive layers 30, 31, 32 is composed of the pressure-sensitive adhesive layer of the present invention. Since the image display device 3 comprises the pressure-sensitive adhesive layer of the present invention in the laminated structure, it has high reliability in which the adhesive strength does not change easily in response to environmental changes, and excellent durability.

In the image display device 3, the pressure-sensitive adhesive layer 30 is located on the most visible side of the laminated structure and is most susceptible to external environmental influences such as outside air temperature, humidity, and external light. Accordingly, it is preferable that the pressure-sensitive adhesive layer 30 is composed of the pressure-sensitive adhesive layer of the present invention having high reliability in which the adhesive strength does not change easily in response to environmental changes and excellent durability.

Both or one of the pressure-sensitive adhesive layers 31, 32 are preferably composed of the pressure-sensitive adhesive layer of the present invention, but may not be composed of the pressure-sensitive adhesive layer of the present invention.

The touch panel of the present invention is an image display device in which an optical member (touch sensor film) having metal wiring such as a metal mesh film or a silver nanowire film is incorporated.

Figure 4 is a schematic view (cross-sectional view) illustrating a specific example of a preferable form of the touch panel of the present invention.

In Figure 4, 4 shows a touch panel, 40, 41, 42 shows a pressure-sensitive adhesive layer, 43 shows an image display panel, 44 shows a touch sensor film, 45 shows a polarizing film, 46 shows a transparent substrate, and 47 shows metal wiring. The metal wiring 47 is wired on one face of the touch sensor film 44. The touch panel 4 is laminated with the polarizing film 45, the pressure-sensitive adhesive layer 42, the image display panel 43, the pressure-sensitive adhesive layer 41, the touch sensor film 44, the pressure-sensitive adhesive layer 40, and the transparent substrate 46 in this order, and the pressure-sensitive adhesive layer 40 is laminated on the face having the metal wiring 47 of the touch sensor film 44.

At least one of the pressure-sensitive adhesive layer 40, 41, 42 is composed of the pressure-sensitive adhesive layer of the present invention. Since the touch panel 4 comprises the pressure-sensitive adhesive layer of the present invention in the laminated structure, it has high reliability in which the adhesive strength does not change easily in response to environmental changes and excellent durability.

In the touch panel 4, the pressure-sensitive adhesive layer 40 is located on the most visible side of the laminated structure and is most susceptible to external environmental influences such as outside air temperature, humidity, and external light. Furthermore, the pressure-sensitive adhesive layer 40 is laminated on the face having the metal wiring 47 of the touch sensor film 44, so that it sufficiently conforms the level difference formed with the metal wiring 47 and no air bubbles remain. Accordingly, it is preferable that the pressure-sensitive adhesive layer 40 is composed of the pressure-sensitive adhesive layer of the present invention, having high reliability in which the adhesive strength does not change easily in response to environmental changes and excellent durability. The pressure-sensitive adhesive layer 40 is preferably composed of the pressure-sensitive adhesive layer of the present invention having excellent level difference conformability. Both or one of the pressure-sensitive adhesive layers 41, 42 are preferably composed of the pressure-sensitive adhesive layer of the present invention, but may not be composed of the pressure-sensitive adhesive layer of the present invention.

A method for forming the metal wiring on the touch sensor film is not particularly limited, and examples thereof include a method in which a metal layer provided in advance is removed by etching or the like and a printing method.

The image display device and the touch panel of the present invention may further include optical members such as wavelength plates, retardation film, and optical compensation films. These optical members may be a single optical member or a plurality of optical members. Examples of the lamination form with these optical members include, but not particularly limited to, (1) a form in which an optical member and the optical member with a pressure-sensitive adhesive layer of the present invention are laminated with the pressure-sensitive adhesive sheet of the present invention intervened therebetween, and (2) a form in which an optical member and the optical member with a pressure-sensitive adhesive layer of the present invention are laminated with a pressure-sensitive adhesive sheet other than the pressure-sensitive adhesive sheet of the present invention intervened therebetween.

## Examples

The present invention will be described hereinafter more specifically based on examples, but the present invention is not intended to be limited to these examples. The numbers of parts formulated (parts by weight) each indicate the number of parts formulated of each component described.

[Production Example 1: Preparation of prepolymer composition A]

To a monomer mixture constituted by 56 parts by weight of 2-ethylhexyl acrylate (2EHA), 24 parts by weight of isostearyl acrylate (ISTA), 19 parts by weight of N-vinyl-2-pyrrolidone (NVP), and 1 part by weight of 4-hydroxybutyl acrylate (4-HBA), 0.03 parts by weight of a photopolymerization initiator (trade name "Omnirad 184", manufactured by IGM Resins B.V.) and 0.03 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition A, in which the monomer components were partially polymerized.

[Production Example 2: Preparation of prepolymer composition B]

To a monomer mixture constituted by 56 parts by weight of 2-ethylhexyl acrylate (2EHA), 24 parts by weight of isostearyl acrylate (ISTA), 14 parts by weight of N-vinyl-2-pyrrolidone (NVP), and 6 parts by weight of 4-hydroxybutyl acrylate (4-HBA), 0.03 parts by weight of a photopolymerization initiator (trade name "Omnirad 184", manufactured by IGM Resins B.V.) and 0.03 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition B, in which the monomer components were partially polymerized.

[Production Example 3: Preparation of prepolymer composition C]

To a monomer mixture constituted by 40.5 parts by weight of 2-ethylhexyl acrylate (2EHA), 40.5 parts by weight of isostearyl acrylate (ISTA), 18 parts by weight of N-vinyl-2-pyrrolidone (NVP), and 1 part by weight of 4-hydroxybutyl acrylate (4-HBA), 0.05 parts by weight of a photopolymerization initiator (trade name "Omnirad 184", manufactured by IGM Resins B.V.) and 0.05 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition C, in which the monomer components were partially polymerized.

[Production Example 4: Preparation of prepolymer composition D]

To a monomer mixture constituted by 67 parts by weight of butyl acrylate (BA), 14 parts by weight of cyclohexyl acrylate (CHA), and 19 parts by weight of 4-hydroxybutyl acrylate (4-HBA), 0.09 parts by weight of a photopolymerization initiator (trade name "Omnirad 184", manufactured by IGM Resins B.V.) and 0.09 parts by weight of a photopolymerization initiator (trade name "Omnirad 651", manufactured by IGM Resins B.V.) were formulated. Then, ultraviolet was applied until the viscosity (BH viscometer No. 5 rotor, 10 rpm, measurement temperature: 30°C) reached about 20 Pa·s to thereby obtain a prepolymer composition D, in which the monomer components were partially polymerized.

[Example 1]

To 100 parts by weight of the prepolymer composition A obtained in Production Example 1, 1.5 parts by weight of hydrogenated 1,2-polybutadiene (trade name "BI-3000", number average molecular weight (Mn): 4750 (found), weight average molecular weight (Mw): 6150 (found), polydispersity (Mw/Mn): 1.30 (found), hydrogenation ratio: 97% or more (catalog value), iodine value: 21 or less (catalog value), manufactured by Nippon Soda Co., Ltd.), 21 parts by weight of hydrogenated 1,2-polybutadiene glycol (trade name "GI-2000", number average molecular weight (Mn): 3110 (found), weight average molecular weight (Mw): 5090 (found), polydispersity (Mw/Mn): 1.64 (found), hydrogenation ratio: 93% or more (catalog value), iodine value: 21 or less (catalog value), manufactured by Nippon Soda Co., Ltd.), 0.07 parts by weight of trimethylolpropane triacrylate (TMPTA), and 0.3 parts by weight of a silane coupling agent (trade name "KBM-403", manufactured by Shin-Etsu Chemical Co., Ltd.) were added and mixed to thereby obtain a pressure-sensitive adhesive composition (composition before curing).

The pressure-sensitive adhesive composition was applied on a polyethylene terephthalate (PET) release liner (heavy release liner, trade name "MRF75", manufactured by Mitsubishi Resin Co., Ltd.) such that the final thickness (thickness of the pressure-sensitive adhesive layer) was 250 um to form an applied layer (pressure-sensitive adhesive composition layer). Then, the applied layer was covered by providing a PET release liner (light release liner, trade name "MRE75", manufactured by Mitsubishi Resin Co., Ltd.) on the applied layer to block oxygen. A laminate of MRF75/applied layer (pressure-sensitive adhesive composition layer)/MRE75 was thus obtained. Next, this laminate was irradiated from the top face of the laminate (MRF38 side) with ultraviolet having an illuminance of 5 $mW/cm^2$ for 300 seconds using a black light (manufactured by TOSHIBA CORPORATION). Additionally, a drying treatment was conducted in a dryer at 90°C for 2 minutes to volatilize the remaining monomers. Then, obtained was a substrateless double-coated pressure-sensitive adhesive sheet that was composed only of the pressure-sensitive adhesive layer and in which both the faces of the pressure-sensitive adhesive layer were protected with the release liners.

[Examples 2 to 3 and Comparative Examples 1]

Each substrateless double-coated pressure-sensitive adhesive sheet was obtained in the same manner as in Example 1 except for the composition of the pressure-sensitive adhesive composition and the thickness of the pressure-sensitive adhesive layer shown in Table 1.

[Table 1]

**(Table 1)**

| Formulation | | Example 1 | Example 2 | Example 3 | Comparativ e Example 1 |
|---|---|---|---|---|---|
| Prepolymer composition | A | 100 | - | - | - |
| | B | - | 100 | - | - |
| | C | - | - | 100 | |
| | D | - | - | - | 100 |
| Monomer | HEA | - | - | - | 9 |
| | 4-HBA | - | - | - | 8 |
| Hydrogenated polyolefin | BI-3000 | 1.5 | 3 | - | - |
| | GI-2000 | 21 | 12 | - | - |
| Polyfunctional acrylate | TMPTA | 0.07 | 0.05 | 0.3 | - |
| | DPHA | - | - | - | 0.12 |
| Silane coupling agent | KBM-403 | 0.3 | 0.3 | 0.02 | 0.35 |
| Pressure-sensitive adhesive thickness (μm) | | 250 | 250 | 250 | 250 |

The details of the components shown in Table 1 are as follows.

(Prepolymer composition)

A: Prepolymer composition A produced in Production Example 1
B: Prepolymer composition B produced in Production

Example 2

C: Prepolymer composition C produced in Production

Example 3

D: Prepolymer composition D produced in Production

Example 4

(Monomer)

HEA: 2-hydroxyethyl acrylate
4-HBA: 4-hydroxybutyl acrylate

(Hydrogenated polyolefin)

BI-3000: trade name "BI-3000", hydrogenated 1,2-polybutadiene, number average molecular weight (Mn): 4750 (found), weight average molecular weight (Mw): 6150 (found), polydispersity (Mw/Mn): 1.30 (found), hydrogenation ratio: 97% or more (catalog value), iodine value: 21 or more (catalog value), manufactured by Nippon Soda Co., Ltd.
GI-2000: trade name "GI-2000", hydrogenated 1,2-polybutadiene glycol, number average molecular weight (Mn): 3110 (found), weight average molecular weight (Mw): 5090 (found), polydispersity (Mw/Mn): 1.64 (found), hydrogenation ratio: 97% or more (catalog value), iodine value: 21 or less (catalog value), manufactured by Nippon Soda Co., Ltd.

(Polyfunctional acrylate)

TMPTA: trimethylolpropane triacrylate
DPHA: dipentaerythritol hexaacrylate

(Silane coupling agent)

KBM-403: trade name "KBM-403", 3-glycidoxypropyltrimethoxysilane, manufactured by Shin-Etsu Chemical Co., Ltd.
The founds of the number average molecular weight (Mn), weight average molecular weight (Mw), and polydispersity (Mw/Mn) of the hydrogenated polyolefins were determined from values obtained by measurement by GPC (gel permeation chromatography) under the following conditions and calculation in terms of polystyrene.
Analysis apparatus: GPC: HLC-8320GPC (TOSOH CORPORATION)

Measurement conditions:

Column: TSKgel Super HZM-H/HZ4000/HZ3000/HZ2000
Column size: 6.0 mm I.D. × 150 mm
Eluent: THF (tetrahydrofuran)
Flow rate: 0.6 mL/min
Detector: differential refractometer (RI)
Column temperature: 40°C
Amount injected: 20 μL

The molecular weights were calculated in terms of polystyrene.

[Evaluation of characteristics]

The following measurements and evaluations were conducted on the substrateless double-coated pressure-sensitive adhesive sheets of Examples and Comparative Examples.

(1) Measurement method of water absorption rate and water absorption speed

The substrateless double-coated pressure-sensitive adhesive sheets of Examples and Comparative Examples were cut out into 1 cm square pieces, then the pressure-sensitive adhesive layer after separating the release liners on both faces was set in a moisture absorption and desorption measurement device (IGA-Sorp, manufactured by HIDEN ISOCHEMA LTD), and moisture absorption and desorption were measured. The measurement mode was set to a sequence mode, and the weight when the environmental conditions were continuously changed in the program order shown in Table 2 below was measured over time.

[Table 2]

(Table 2)

| Program order | Temperature setting (°C) | Humidity setting (% RH) | Standing time (min) |
|---|---|---|---|
| 1 | 150 | 0 | 60 |
| 2 | 23 | 0 | 240 |
| 3 | 23 | 25 | 240 |
| 4 | 23 | 50 | 240 |
| 5 | 23 | 75 | 360 |
| 6 | 23 | 90 | 360 |
| 7 | 23 | 75 | 360 |
| 8 | 23 | 50 | 360 |
| 9 | 23 | 25 | 240 |
| 10 | 23 | 0 | 240 |

The state at the end of the program 2 was defined as an absolute dry state, and the weight change rates at the end of the programs 2 to 6 determined by the following formula from the absolute dry state were defined as the water absorption rate X0, X25, X50, X75, and X90 (%), respectively. The results are shown in Table 3.

Water absorption rate (%) = (weight at the end of each program - weight at the end of program 2 (absolute dry state))/(weight at the end of program 2 (absolute dry state)) × 100

The times (min) from the water absorption rate at each start of the program 3 to 6 (water absorption rate at the end of the program in the previous stage) to the half value of the water absorption rates at each end of the programs were measured, and defined as the water absorption rates T25, T50, T75, and T95, respectively. The results are shown in Table 3.

(2) Method for measuring adhesive strength

The light release liner was separated from the substrateless double-coated pressure-sensitive adhesive sheet of Examples and Comparative Examples, and a PET film (Lumirror S10, manufactured by Toray Industries, Inc., thickness 25 μm) was laminated on the exposed face of the exposed pressure-sensitive adhesive layer to obtain a laminate. Next, a test specimen (width 20 mm × length 150 mm) was cut from this laminate, the heavy release liner was separated, and laminated onto a glass plate (soda glass, green polished plate, manufactured by Matsunami Glass Ind., Ltd.). In this lamination, the test specimen was pressure-bonded to an object by one round trip of a 2 kg roller under an environment of 25°C. After standing the laminate at 23°C for 2 minutes from the lamination, a release test was performed by separating the test specimen from the glass plate, and the release strength was measured as the adhesive strength. In the above measurement, the measurement temperature was set to 23°C, the separation angle of the test specimen to the object was set to 180°, the tensile speed of the test specimen was set to 300 mm/min, and the separation length was set to 50 mm (measurement conditions of the release test). After filming the pressure-sensitive adhesive layer, the adhesive strength was measured by the above-described method within 12 hours, and the initial adhesive strength (N/20 mm) was defined as Y0. After that, the adhesive strength (N/20 mm) was measured by the above-described method for the test specimens stored for 24 hours, 48 hours, 120 hours, 144 hours, 168 hours, and 216 hours under conditions of 23°C 50% RH, and defined as Y24, Y48, Y120, Y144, Y168, and Y216, respectively. The graph of the transition of each adhesive strength is shown in Figure 5, and the initial adhesive strength Y0, the adhesive strength Y48 after 48 hours of storage, and the change rate of the adhesive strength from Y0 to Y48 ((Y0 - Y48)/Y0 × 100) (%) are shown in Table 3. In Comparative Example 1, where X90 exceeds 1.5%, a sharp decrease in adhesive strength was observed 48 hours after the initial adhesive strength, while in Examples 1 to 3, where X90 is 1.5% or less, the changes in adhesive strength from the initial adhesive strength are small, indicating that adhesive strength is highly reliable.

[Table 3]

(Table 3)

| | Water absorption rate (%) | | | | | | Water absorption speed (time reaching to half value) (min) | | | | | Adhesive strength to glass (N/20 mm) | | Change rate of adhesive strength (%) |
|---|---|---|---|---|---|---|---|---|---|---|---|---|---|---|
| | Program | | | | | X90-X25 | Program | | | | T90/T25 | Initial | After 48 hrs | (Y0-Y48) /Y0×100 |
| | 2 | 3 | 4 | 5 | 6 | | 3 | 4 | 5 | 6 | | | | |
| | X0 | X25 | X50 | X75 | X90 | | T25 | T50 | T75 | T90 | | Y0 | Y48 | |
| Example 1 | 0 | 0.2 | 0.5 | 0.8 | 1.2 | 1.0 | 19 | 20 | 18 | 20 | 1.1 | 19 | 18 | 4.3 |
| Example 2 | 0 | 0.2 | 0.4 | 0.7 | 1.0 | 0.8 | 18 | 19 | 20 | 18 | 1.0 | 17 | 16 | 7.0 |
| Example 3 | 0 | 0.2 | 0.5 | 0.9 | 1.4 | 12 | 22 | 28 | 26 | 33 | 1.5 | 29 | 30 | -2.8 |
| Comparative Example 1 | 0 | 0.4 | 0.9 | 1.8 | 2.5 | 2.1 | 13 | 11 | 14 | 14 | 1.1 | 15 | 10 | 33.8 |

Variations of the present invention will be attached below.

[Attachment 1]

A pressure-sensitive adhesive composition for forming a pressure-sensitive adhesive layer used for laminating an optical member of an image display device, wherein
when a water absorption rate of the pressure-sensitive adhesive layer stored under conditions at 23°C 90% RH for 360 minutes is defined as X90 (%), the following formula (1) is satisfied:

$$X90 \leq 1.5\% \quad (1).$$

[Attachment 2]

The pressure-sensitive adhesive composition according to attachment 1, wherein when a water absorption rate of the pressure-sensitive adhesive layer stored under conditions at 23°C 25% RH for 240 minutes is defined as X25 (%), the following formula (2) is satisfied:

$$X90 - X25 \leq 1.5\% \quad (2).$$

[Attachment 3]

The pressure-sensitive adhesive composition according to attachment 1 or 2, wherein when a time reaching from a water absorption rate X75 (%) of the pressure-sensitive adhesive layer stored under conditions at 23°C 75% RH for 360 minutes to a half value of the water absorption rate X90 (%) of the pressure-sensitive adhesive layer stored under conditions at 23°C 90% RH for 360 minutes is defined as T90 (min), the following formula (3) is satisfied:

$$T90 \geq 16 \text{ min} \quad (3).$$

[Attachment 4]

The pressure-sensitive adhesive composition according to attachment 3, wherein when a time reaching from an absolute dry state of the pressure-sensitive adhesive layer to a half value of the water absorption rate X25 (%) of the pressure-sensitive adhesive layer stored under conditions at 23°C 25% RH for 240 minutes is defined as T25 (min), the following formula (4) is satisfied:

$$T90/T25 \geq 1.0 \quad (4).$$

[Attachment 5]

The pressure-sensitive adhesive composition according to any one of attachments 1 to 4, wherein the composition comprises an acrylic polymer as a base polymer, and the acrylic polymer contains a (meth)acrylic alkyl ester having an alkyl group having 8 or more carbon atoms as a monomer unit.

[Attachment 6]

The pressure-sensitive adhesive composition according to attachment 5, wherein the (meth)acrylic alkyl ester comprises a (meth)acrylic alkyl ester having a branched-chain alkyl group having 8 or 9 carbon atoms.

[Attachment 7]

The pressure-sensitive adhesive composition according to attachment 6, wherein the (meth)acrylic alkyl ester further comprises a (meth)acrylic alkyl ester having a branched-chain alkyl group having 10 to 24 carbon atoms.

[Attachment 8]

The pressure-sensitive adhesive composition according to any one of attachments 5 to 7, wherein the acrylic polymer contains a functional group-containing monomer as a monomer unit.

[Attachment 9]

The pressure-sensitive adhesive composition according to any one of attachments 5 to 8, wherein the acrylic polymer contains a nitrogen atom-containing monomer as a monomer unit.

[Attachment 10]

The pressure-sensitive adhesive composition according to any one of attachments 5 to 9, wherein the acrylic polymer contains a hydroxyl group-containing monomer as a monomer unit.

[Attachment 11]

A pressure-sensitive adhesive layer formed of the pressure-sensitive adhesive composition according to any one of attachments 1 to 10.

[Attachment 12]

A pressure-sensitive adhesive sheet comprising the pressure-sensitive adhesive layer according to attachment 11.

[Attachment 13]

An optical member with a pressure-sensitive adhesive layer, wherein the pressure-sensitive adhesive sheet according to attachment 12 is laminated on at least one face of an optical member.

[Attachment 14]

An image display device comprising the optical member with a pressure-sensitive adhesive layer according to attachment 13.

[Attachment 15]

The image display device according to attachment 14, which is a touch panel.

Reference Signs List

1 pressure-sensitive adhesive sheet
10 pressure-sensitive adhesive layer
11, 12 release liner
2A optical member with pressure-sensitive adhesive layer
2B touch sensor film with pressure-sensitive adhesive layer
20 pressure-sensitive adhesive layer
21 optical member
22 release liner
23 touch sensor film
24 metal wiring
3 image display device
30, 31, 32 pressure-sensitive adhesive layer
33 image display panel
34, 35 polarizing film
36 transparent substrate

4 touch panel
40, 41, 42 pressure-sensitive adhesive layer
43 image display panel
44 touch sensor film
45 polarizing film
46 transparent substrate
47 metal wiring

## Claims

1. A pressure-sensitive adhesive composition for forming a pressure-sensitive adhesive layer used for laminating an optical member of an image display device, wherein when a water absorption rate of the pressure-sensitive adhesive layer stored under conditions at 23°C 90% RH for 360 minutes is defined as X90 (%), the following formula (1) is satisfied:

$$X90 \leq 1.5\% \quad (1).$$

2. The pressure-sensitive adhesive composition according to claim 1, wherein when a water absorption rate of the pressure-sensitive adhesive layer stored under conditions at 23°C 25% RH for 240 minutes is defined as X25 (%), the following formula (2) is satisfied:

$$X90 - X25 \leq 1.5\% \quad (2).$$

3. The pressure-sensitive adhesive composition according to claim 1 or 2, wherein when a time reaching from a water absorption rate X75 (%) of the pressure-sensitive adhesive layer stored under conditions at 23°C 75% RH for 360 minutes to a half value of the water absorption rate X(90%) of the pressure-sensitive adhesive layer stored under conditions at 23°C 90% RH for 360 minutes is defined as T90 (min), the following formula (3) is satisfied:

$$T90 \geq 16 \text{ min} \quad (3).$$

4. The pressure-sensitive adhesive composition according to claim 3, wherein when a time reaching from an absolute dry state of the pressure-sensitive adhesive layer to a half value of the water absorption rate X25 (%) of the pressure-sensitive adhesive layer stored under conditions at 23°C 25% RH for 240 minutes is defined as T25 (min), the following formula (4) is satisfied:

$$T90/T25 \geq 1.0 \quad (4).$$

5. The pressure-sensitive adhesive composition according to any one of claims 1 to 4, wherein the composition comprises an acrylic polymer as a base polymer, and the acrylic polymer contains a (meth)acrylic alkyl ester having an alkyl group having 8 or more carbon atoms as a monomer unit.

6. The pressure-sensitive adhesive composition according to claim 5, wherein the (meth)acrylic alkyl ester comprises a (meth)acrylic alkyl ester having a branched-chain alkyl group having 8 or 9 carbon atoms.

7. The pressure-sensitive adhesive composition according to claim 6, wherein the (meth)acrylic alkyl ester further comprises a (meth)acrylic alkyl ester having a branched-chain alkyl group having 10 to 24 carbon atoms.

8. The pressure-sensitive adhesive composition according to any one of claims 5 to 7, wherein the acrylic polymer contains a functional group-containing monomer as a monomer unit.

9. The pressure-sensitive adhesive composition according to any one of claims 5 to 8, wherein the acrylic polymer contains a nitrogen atom-containing monomer as a monomer unit.

**10.** The pressure-sensitive adhesive composition according to any one of claims 5 to 9, wherein the acrylic polymer contains a hydroxyl group-containing monomer as a monomer unit.

**11.** A pressure-sensitive adhesive layer formed of the pressure-sensitive adhesive composition according to any one of claims 1 to 10.

**12.** A pressure-sensitive adhesive sheet comprising the pressure-sensitive adhesive layer according to claim 11.

**13.** An optical member with a pressure-sensitive adhesive layer, wherein the pressure-sensitive adhesive sheet according to claim 12 is laminated on at least one face of an optical member.

**14.** An image display device comprising the optical member with a pressure-sensitive adhesive layer according to claim 13.

**15.** The image display device according to claim 14, which is a touch panel.

[Figure 1]

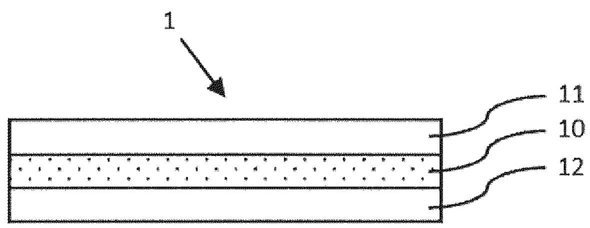


[Figure 2]

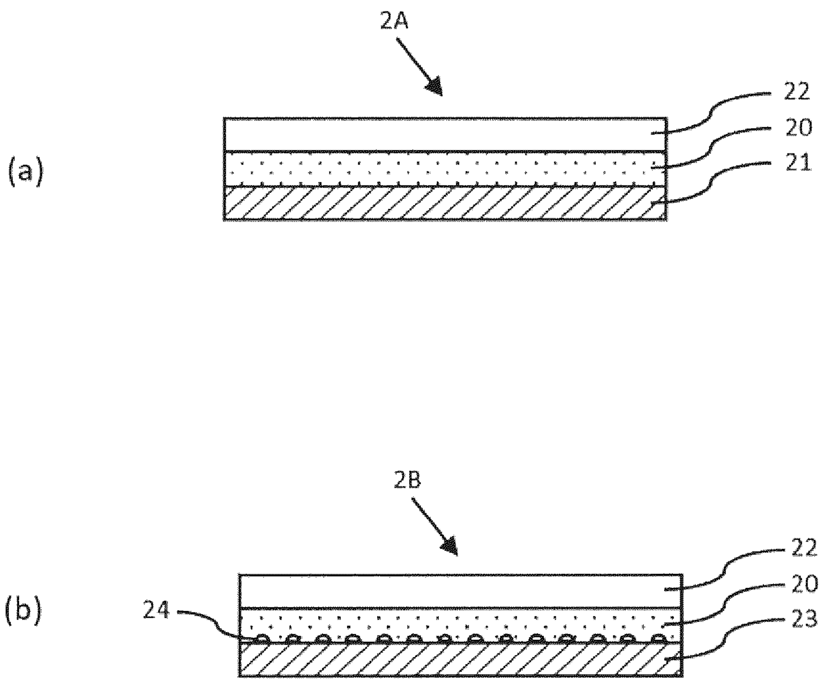

[Figure 3]

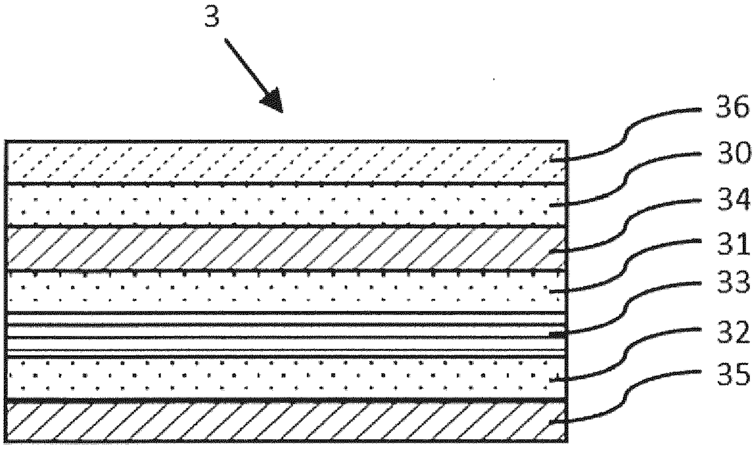


[Figure 4]

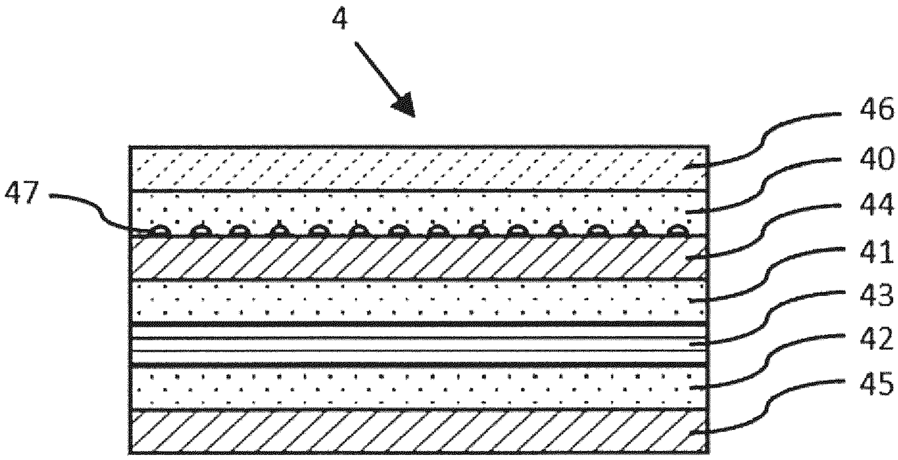

[Figure 5]

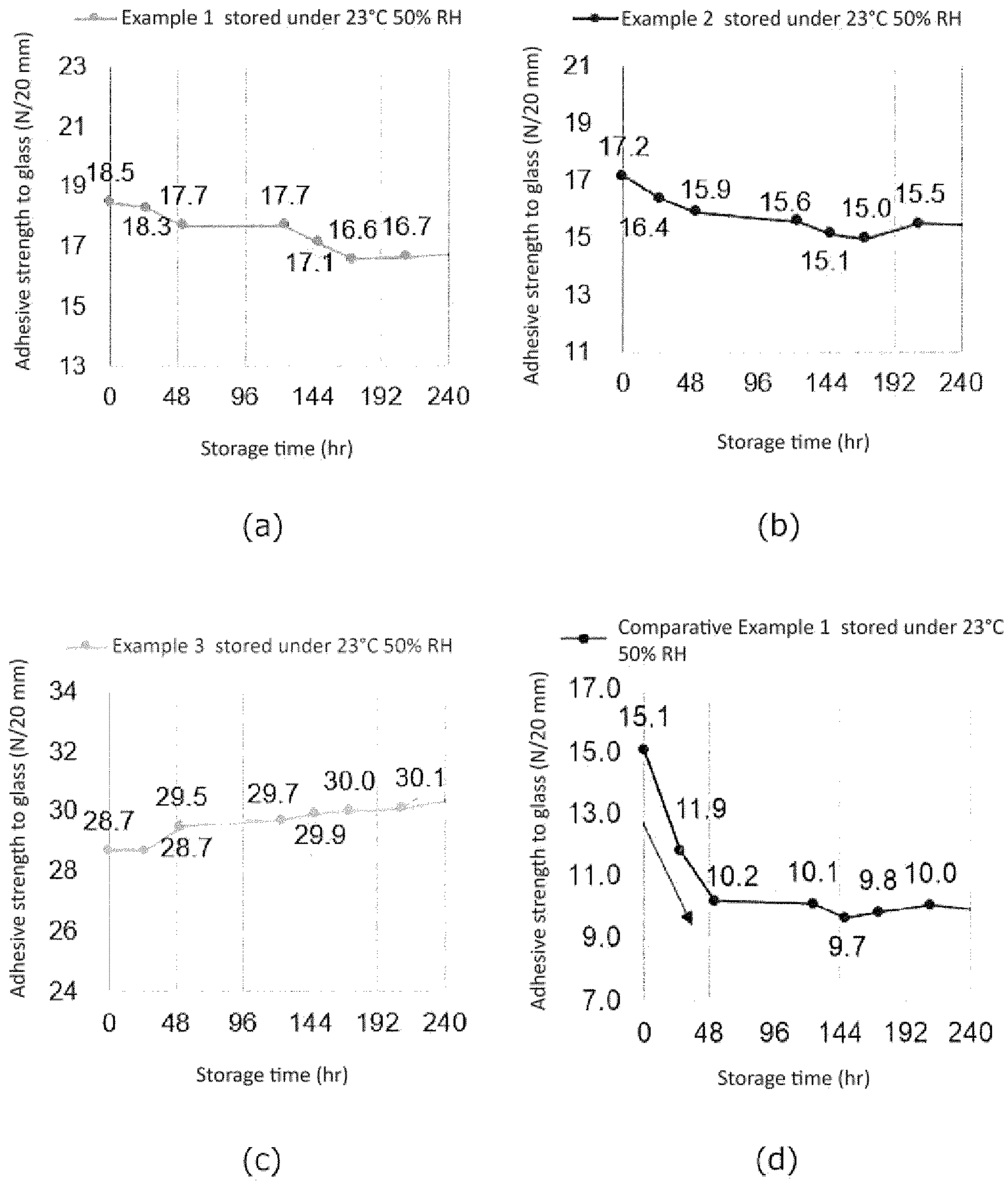


(a) (b) (c) (d)

Europäisches Patentamt
European Patent Office
Office européen des brevets

# EUROPEAN SEARCH REPORT

Application Number
EP 24 18 0820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 128470 A (NITTO DENKO CORP) 27 August 2020 (2020-08-27) * paragraph [0050]; claims 1,11,13; example 10; table 1 * | 1-15 | INV. C09J7/10 C09J7/38 C09J133/04 |
| X | JP 2015 040215 A (SEKISUI CHEMICAL CO LTD) 2 March 2015 (2015-03-02) * paragraphs [0057], [0060]; claims 1-3; examples 1,2; table 1 * | 1-15 | |
| X | US 2014/248489 A1 (HIGASHI MASATSUGU [JP] ET AL) 4 September 2014 (2014-09-04) * paragraph [0005]; claims 9,18,19; examples 14-16,19,23,24; table 2 * | 1-15 | |
| X | US 2017/101553 A1 (TAKARADA SHOU [JP] ET AL) 13 April 2017 (2017-04-13) * paragraphs [0001], [0083], [0084]; claim 1; table 1 * | 1-15 | |
| | | | TECHNICAL FIELDS SEARCHED (IPC) |
| | | | C09J C08J C08F |

The present search report has been drawn up for all claims

| Place of search | Date of completion of the search | Examiner |
|---|---|---|
| Munich | 26 September 2024 | Kahl, Philipp |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 0820

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| JP 2020128470 A | 27-08-2020 | CN 111534238 A | 14-08-2020 |
| | | CN 117363227 A | 09-01-2024 |
| | | JP 7365772 B2 | 20-10-2023 |
| | | JP 2020128470 A | 27-08-2020 |
| | | KR 20200097216 A | 18-08-2020 |
| | | TW 202039741 A | 01-11-2020 |
| JP 2015040215 A | 02-03-2015 | NONE | |
| US 2014248489 A1 | 04-09-2014 | CN 103764781 A | 30-04-2014 |
| | | EP 2762544 A1 | 06-08-2014 |
| | | JP 5426715 B2 | 26-02-2014 |
| | | JP 2013082880 A | 09-05-2013 |
| | | KR 20140022458 A | 24-02-2014 |
| | | TW 201317314 A | 01-05-2013 |
| | | US 2014248489 A1 | 04-09-2014 |
| | | US 2017002235 A1 | 05-01-2017 |
| | | WO 2013047210 A1 | 04-04-2013 |
| US 2017101553 A1 | 13-04-2017 | CN 106867418 A | 20-06-2017 |
| | | JP 6944759 B2 | 06-10-2021 |
| | | JP 2017075998 A | 20-04-2017 |
| | | KR 20170043450 A | 21-04-2017 |
| | | TW 201726850 A | 01-08-2017 |
| | | US 2017101553 A1 | 13-04-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238915 A
- JP 2003342542 A
- JP 2004231723 A